# EUROPEAN PATENT APPLICATION

(11) **EP 4 369 792 A1**
(43) Date of publication of application: **15.05.2024**
(21) Application number: 22851825.4
(22) Date of filing: 08.07.2022
(51) Int. Cl.: H04W 40/02

(54) **ROUTING METHOD AND COMMUNICATION APPARATUS**

(30) Priority: 04.08.2021 CN 202110891824; 18.09.2021 CN 202111101156
(71) Applicant: Huawei Technologies Co., Ltd., Shenzhen, Guangdong 518129 (CN)
(72) Inventor: SUN, Fei, Shenzhen, Guangdong 518129 (CN); LI, Kuikui, Shenzhen, Guangdong 518129 (CN); ZHU, Yuanping, Shenzhen, Guangdong 518129 (CN); SHI, Yulong, Shenzhen, Guangdong 518129 (CN)
(74) Representative: Gill Jennings & Every LLP
(86) International application number: PCT/CN2022/104743
(87) International publication number: WO 2023/011111

(57) **Abstract**

Embodiments of this application disclose a routing method and a communication apparatus, applied to an IAB network. The IAB network includes a first BAP topology and a second BAP topology, the first BAP topology is managed by a first donor node, the second BAP topology is managed by a second donor node, and the first donor node is different from the second donor node. The routing method includes: A first IAB node receives a first data packet, where the first IAB node is managed by the first donor node, at least one parent node of the first IAB node is managed by the second donor node, and the first IAB node belongs to the first BAP topology. The first IAB node processes the first data packet based on a BAP topology corresponding to an ingress link for receiving the first data packet and the BAP topology to which the first IAB node belongs. The first data packet can be routed to a correct transmission path.

## Description

This application claims priorities to Chinese Patent Application No. 202110891824.2, filed with the China National Intellectual Property Administration on August 4, 2021 and entitled "ROUTING METHOD AND COMMUNICATION APPARATUS", and to Chinese Patent Application No. 202111101156.5, filed with the China National Intellectual Property Administration on September 18, 2021 and entitled "ROUTING METHOD AND COMMUNICATION APPARATUS", both of which are incorporated herein by reference in their entireties.

### TECHNICAL FIELD

This application relates to the field of communication technologies, and in particular, to a routing method and a communication apparatus.

### BACKGROUND

Compared with a 4^{th} generation mobile communication system, a 5^{th} generation (5^{th} generation, 5G) mobile communication system and a future mobile communication system impose a stricter requirement on each performance indicator of a network. For example, compared with 4G, 5G has a capacity increase of 1000 times, a wider-coverage requirement, and ultra-high reliability and ultra-low latency. In an aspect, considering that high-frequency carrier frequency resources are abundant, high-frequency small cell networking becomes increasingly popular in hotspot areas to meet an ultra-high capacity requirement of 5G. High frequency carriers have a poor propagation feature, are severely attenuated by obstacles, and have small coverage. Therefore, a large quantity of small cells need to be densely deployed. However, it is costly to provide optical fiber backhaul for the large quantity of densely deployed small cells, and construction is difficult. Therefore, an economical and convenient backhaul solution is required. In another aspect, in consideration of the requirement of wide coverage, it is difficult and costly to deploy optical fibers for network coverage in some remote areas. Therefore, a flexible and convenient access and backhaul solution also needs to be designed. An integrated access and backhaul (integrated access and backhaul, IAB) technology provides a solution to resolve the foregoing two problems. A wireless transmission solution is used for both access links (access link) and backhaul links (backhaul link, BL) of the IAB technology, to reduce optical fiber deployment.

In an IAB network, a relay node RN (relay node), namely, an IAB node (IAB node) may provide a wireless access service and service data forwarding for a user equipment (UE, user equipment). Service data of the UE is transmitted by the IAB node to an IAB donor (IAB donor) through a wireless backhaul link. The IAB donor may also be referred to as a donor node (donor node) or a donor gNodeB (donor gNodeB, DgNB). The IAB node includes a mobile termination (mobile termination, MT) part and a distributed unit (distributed unit, DU) part. When the IAB node is oriented to a parent node of the IAB node, the IAB node may serve as a terminal device, that is, a role of an MT. When the IAB node is oriented to a child node of the IAB node (where the child node may be another IAB node or a UE), the IAB node is considered as a network device, that is, a role of a DU. The donor gNodeB (DgNB) may be an access network element having functions of a complete base station, or an access network element in a separation form of a central unit (central unit, CU) and a distributed unit (distributed unit, DU). The donor gNodeB is connected to a core network (for example, connected to a 5G core network) element that serves the UE, and provides a wireless backhaul function for the IAB node.

In the IAB network, each IAB boundary node (boundary node) needs to route, to a correct path, a data packet passing through the IAB boundary node. Therefore, how to enable the IAB boundary node to route, to the correct path, the data packet passing through the IAB boundary node is a problem that needs to be resolved.

### SUMMARY

Embodiments of this application disclose a routing method and a communication apparatus, so that an IAB boundary node can route, to a correct path, a data packet passing through the IAB boundary node.

According to a first aspect, an embodiment of this application provides a routing method. The method is applied to an integrated access and backhaul IAB network, the IAB network includes a first BAP topology and a second BAP topology, the first BAP topology is managed by a first donor node, the second BAP topology is managed by a second donor node, and the first donor node is different from the second donor node. The method may be performed by a first communication apparatus. The first communication apparatus may be a communication device or a communication apparatus that can support the communication device in implementing a function required by the method, for example, a chip system. The following uses an example in which the first communication apparatus is a first IAB node for description. The method includes:

The first IAB node receives a first data packet, where the first IAB node is managed by the first donor node, at least one parent node of the first IAB node is managed by the second donor node, and the first IAB node belongs to the first BAP topology. The first IAB node processes the first data packet based on a BAP topology corresponding to an ingress link for receiving the first data packet and the BAP topology to which the first IAB node belongs.

The first IAB node may determine, for the received first data packet (downlink data packet), whether to rewrite a BAP routing ID of the first data packet. It should be understood that, it is ensured that the first data packet is routed to a correct path when the first IAB node can accurately determine whether to rewrite the BAP routing ID of the received first data packet.

In this embodiment of this application, the first IAB node can accurately determine, based on the BAP topology corresponding to the ingress link for receiving the first data packet and the BAP topology to which the first IAB node belongs, whether to rewrite the BAP routing ID of the received first data packet, to route the first data packet to the correct path.

In a possible implementation, that the first IAB node processes the first data packet based on a BAP topology corresponding to an ingress link for receiving the first data packet and the BAP topology to which the first IAB node belongs includes: When the BAP topology corresponding to the ingress link used by the first IAB node to receive the first data packet is not the first BAP topology and a first condition is not met, the first IAB node forwards the first data packet based on a second BAP routing identifier and a routing table, where the first condition includes: a first BAP address matches a second BAP address, where the second BAP routing identifier is obtained by rewriting a first BAP routing identifier of the first data packet, and the first BAP routing identifier includes a destination BAP address and a path identifier of the first data packet; and the first BAP address is obtained by rewriting the destination BAP address of the first data packet, and the second BAP address is a BAP address allocated by the first donor node to the first IAB node; or the first BAP address is the destination BAP address of the first data packet, and the second BAP address is a BAP address allocated by the second donor node to the first IAB node.

When the BAP topology corresponding to the ingress link used by the first IAB node to receive the first data packet is not the first BAP topology and the first IAB node belongs to the first BAP topology, the first IAB node cannot identify a BAP routing identifier of a first data packet. If the first IAB node needs to forward the first data packet, the first IAB node may change the BAP routing identifier of the first data packet to a BAP routing identifier that can be identified by the first IAB node. The first condition may be understood as a condition for the first IAB node to determine, when the BAP topology corresponding to the ingress link used by the first IAB node to receive the first data packet is not the first BAP topology, whether to forward the first data packet. When the first condition is not met, the first IAB node forwards the first data packet. It should be understood that, when the BAP topology corresponding to the ingress link used by the first IAB node to receive the first data packet is not the first BAP topology and the first condition is not met, the first IAB node forwards the first data packet, and rewrites the BAP routing identifier of the first data packet.

In this implementation, when the BAP topology corresponding to the ingress link used by the first IAB node to receive the first data packet is not the first BAP topology and the first condition is not met, the first IAB node forwards the first data packet based on the second BAP routing identifier and the routing table, so that the first data packet can be routed to the correct path.

In a possible implementation, the first condition further includes: First indication information included in the first data packet indicates to submit the first data packet to an upper layer of a BAP layer of the first IAB node.

In this implementation, the first condition further includes: The first indication information included in the first data packet indicates to submit the first data packet to the upper layer of the BAP layer of the first IAB node. In this implementation, the first data packet is submitted to the upper layer of the BAP layer only when the condition that the first indication information indicates to submit the first data packet to the upper layer of the BAP layer of the first IAB node. This can avoid incorrectly submitting the first data packet to the upper layer of the BAP layer of the first IAB node.

In a possible implementation, before the first IAB node forwards the first data packet based on the routing table, the method further includes: The first IAB node rewrites the first BAP routing identifier of the first data packet as the second BAP routing identifier. That the first IAB node forwards the first data packet based on the routing table includes: The first IAB node forwards the first data packet based on a next-hop BAP address that is in the routing table and that matches the second BAP routing identifier.

In this implementation, the first IAB node forwards the first data packet based on the next-hop BAP address that is in the routing table and that matches the second BAP routing identifier. Because the second BAP routing identifier is a BAP routing identifier that can be identified by a downstream node of the first IAB node, the first IAB node forwards the first data packet based on the next-hop BAP address that is in the routing table and that matches the second BAP routing identifier, and can route the first data packet to the correct transmission path.

In a possible implementation, that the first IAB node processes the first data packet based on a BAP topology corresponding to an ingress link for receiving the first data packet and the BAP topology to which the first IAB node belongs includes: When the BAP topology corresponding to the ingress link used by the first IAB node to receive the first data packet is not the first BAP topology and the first condition is met, the first IAB node submits the first data packet to an upper layer of a BAP layer of the first IAB node, where the first condition includes: the first BAP address matches the second BAP address, where the first BAP address is obtained by rewriting the destination BAP address of the first data packet, and the second BAP address is the BAP address allocated by the first donor node to the first IAB node; or the first BAP address is the destination BAP address of the first data packet, and the second BAP address is the BAP address allocated by the second donor node to the first IAB node.

When the BAP topology corresponding to the ingress link used by the first IAB node to receive the first data packet is not the first BAP topology, the BAP address of the first data packet is allocated by the second donor node. Therefore, the first IAB node may accurately determine, by determining whether the first condition is met, whether the first data packet needs to be submitted to the upper layer of the BAP layer of the first IAB node, to route the first data packet to the correct transmission path.

In a possible implementation, that the first IAB node processes the first data packet based on a BAP topology corresponding to an ingress link for receiving the first data packet and the BAP topology to which the first IAB node belongs includes: When the BAP topology corresponding to the ingress link used by the first IAB node to receive the first data packet is the first BAP topology and a third BAP address does not match a fourth BAP address, the first IAB node forwards the first data packet based on the routing table, where the third BAP address is a destination BAP address of the first data packet, and the fourth BAP address is a BAP address allocated by the first donor node to the first IAB node.

When the BAP topology corresponding to the ingress link used by the first IAB node to receive the first data packet is the first BAP topology, the BAP address of the first data packet is allocated by the first donor node. The first IAB node may accurately determine, by determining whether the third BAP address matches the fourth BAP address, whether the first data packet needs to be submitted to the upper layer of the BAP layer of the first IAB node, to route the first data packet to the correct transmission path.

In a possible implementation, that the first IAB node processes the first data packet based on a BAP topology corresponding to an ingress link for receiving the first data packet and the BAP topology to which the first IAB node belongs includes: When the BAP topology corresponding to the ingress link used by the first IAB node to receive the first data packet is the first BAP topology and a third BAP address matches a fourth BAP address, the first IAB node submits the first data packet to an upper layer of a BAP layer of the first IAB node, where the third BAP address is a destination BAP address of the first data packet, and the fourth BAP address is a BAP address allocated by the first donor node to the first IAB node.

When the BAP topology corresponding to the ingress link used by the first IAB node to receive the first data packet is the first BAP topology, the BAP address of the first data packet is allocated by the first donor node. The first IAB node may accurately determine, by determining whether the third BAP address matches the fourth BAP address, whether the first data packet needs to be submitted to the upper layer of the BAP layer of the first IAB node, to route the first data packet to the correct transmission path.

According to a second aspect, an embodiment of this application provides another routing method. The routing method is applied to an IAB network, the IAB network includes a first BAP topology and a second BAP topology, the first BAP topology is managed by a first donor node, the second BAP topology is managed by a second donor node, and the first donor node is different from the second donor node. The method may be performed by a second communication apparatus. The second communication apparatus may be a communication device or a communication apparatus that can support the communication device in implementing a function required by the method, for example, a chip system. The following uses an example in which the second communication apparatus is a first IAB node for description. The method includes: The first IAB node receives a second data packet from a child node of the first IAB node, where the first IAB node is managed by the first donor node, at least one parent node of the first IAB node is managed by the second donor node, and the first IAB node belongs to the first BAP topology. When obtaining a fourth BAP routing identifier that has a mapping relationship with a third BAP routing identifier of the second data packet, the first IAB node forwards the second data packet based on the fourth BAP routing identifier and a routing table.

When the first IAB node obtains the fourth BAP routing identifier that has the mapping relationship with the third BAP routing identifier of the second data packet, it indicates that the third BAP routing identifier of the second data packet needs to be rewritten. In other words, the first IAB node cannot forward the second data packet by using the third BAP routing identifier. In this case, the second data packet is forwarded based on the fourth BAP routing identifier and the routing table, so that the second data packet can be routed to a correct transmission path.

In this embodiment of this application, when the fourth BAP routing identifier that has the mapping relationship with the third BAP routing identifier of the second data packet is obtained, the second data packet is forwarded based on the fourth BAP routing identifier and the routing table, so that the second data packet can be routed to the correct transmission path.

In a possible implementation, the method further includes: When the first IAB node does not obtain a BAP routing identifier that has a mapping relationship with the third BAP routing identifier of the second data packet, the first IAB node forwards the second data packet based on the third BAP routing identifier and the routing table.

When the first IAB node does not obtain the fourth BAP routing identifier that has the mapping relationship with the third BAP routing identifier of the second data packet, it indicates that the third BAP routing identifier of the second data packet does not need to be rewritten. In other words, when the first IAB node does not obtain the fourth BAP routing identifier that has the mapping relationship with the third BAP routing identifier of the second data packet, the first IAB node can correctly forward the second data packet based on the third BAP routing identifier.

In this implementation, when the first IAB node does not obtain the BAP routing identifier that has the mapping relationship with the third BAP routing identifier of the second data packet, the first IAB node forwards the second data packet based on the third BAP routing identifier and the routing table, so that the second data packet can be routed to the correct transmission path.

According to a third aspect, an embodiment of this application provides another routing method. The method is applied to an IAB network, the IAB network includes a first BAP topology and a second BAP topology, the first BAP topology is managed by a first donor node, the second BAP topology is managed by a second donor node, and the first donor node is different from the second donor node. The method may be performed by a third communication apparatus. The third communication apparatus may be a communication device or a communication apparatus that can support the communication device in implementing a function required by the method, for example, a chip system. The following uses an example in which the third communication apparatus is a first IAB node for description. The method includes:

The first IAB node receives a first data packet; and the first IAB node processes the first data packet based on second indication information in the first data packet and a BAP topology to which the first IAB node belongs, where the second indication information indicates that a destination BAP address of the first data packet is allocated by the first donor node, or the second indication information indicates that a destination BAP address of the first data packet is allocated by the second donor node.

In this embodiment of this application, the first IAB node can accurately determine, based on the second indication information in the first data packet and the BAP topology to which the first IAB node belongs, whether to rewrite a BAP routing ID of the received first data packet, to route the first data packet to a correct path.

In a possible implementation, that the first IAB node processes the first data packet based on second indication information in the first data packet and a BAP topology to which the first IAB node belongs includes: When the second indication information indicates that the destination BAP address of the first data packet is allocated by the second donor node and a first condition is not met, the first IAB node forwards the first data packet based on a second BAP routing identifier and a routing table, where the first condition includes: a first BAP address matches a second BAP address, where the second BAP routing identifier is obtained by rewriting a first BAP routing identifier of the first data packet, and the first BAP routing identifier includes a destination BAP address and a path identifier of the first data packet; and the first BAP address is obtained by rewriting the destination BAP address of the first data packet, and the second BAP address is a BAP address allocated by the first donor node to the first IAB node; or the first BAP address is the destination BAP address of the first data packet, and the second BAP address is a BAP address allocated by the second donor node to the first IAB node.

When the destination BAP address of the first data packet is allocated by the second donor node and the first IAB node belongs to the first BAP topology, the first IAB node cannot identify the BAP routing identifier of a first data packet. If the first IAB node needs to forward the first data packet, the first IAB node changes the BAP routing identifier of the first data packet to a BAP routing identifier that can be identified by the first IAB node. The first condition may be understood as a condition for the first IAB node to determine whether to forward the first data packet when the destination BAP address of the first data packet is allocated by the second donor node. When the first condition is not met, the first IAB node forwards the first data packet. It should be understood that when the destination BAP address of the first data packet is allocated by the second donor node and the first condition is not met, the first IAB node forwards the first data packet, and rewrites the BAP routing identifier of the first data packet.

In this implementation, when the destination BAP address of the first data packet is allocated by the second donor node and the first condition is not met, the first IAB node forwards the first data packet based on the second BAP routing identifier and the routing table, so that the first data packet can be routed to the correct path.

In a possible implementation, the first condition further includes: First indication information included in the first data packet indicates to submit the first data packet to an upper layer of a BAP layer of the first IAB node.

In this implementation, the first condition further includes: The first indication information included in the first data packet indicates to submit the first data packet to the upper layer of the BAP layer of the first IAB node. In this implementation, the first data packet is submitted to the upper layer of the BAP layer when the condition that the first indication information indicates to submit the first data packet to the upper layer of the BAP layer of the first IAB node. This can avoid incorrectly submitting the first data packet to the upper layer of the BAP layer of the first IAB node.

In a possible implementation, before the first IAB node forwards the first data packet based on the routing table, the method further includes: The first IAB node rewrites the first BAP routing identifier of the first data packet as the second BAP routing identifier. That the first IAB node forwards the first data packet based on the routing table includes: The first IAB node forwards the first data packet based on a next-hop BAP address that is in the routing table and that matches the second BAP routing identifier.

In this implementation, the first IAB node forwards the first data packet based on the next-hop BAP address that is in the routing table and that matches the second BAP routing identifier. Because the second BAP routing identifier is a BAP routing identifier that can be identified by a downstream node of the first IAB node, the first IAB node forwards the first data packet based on the next-hop BAP address that is in the routing table and that matches the second BAP routing identifier, and can route the first data packet to the correct transmission path.

In a possible implementation, that the first IAB node processes the first data packet based on second indication information in the first data packet and a BAP topology to which the first IAB node belongs includes: When the second indication information indicates that the destination BAP address of the first data packet is allocated by the second donor node and the first condition is met, the first IAB node submits the first data packet to an upper layer of a BAP layer of the first IAB node, where the first condition includes: the first BAP address matches the second BAP address, where the first BAP address is obtained by rewriting the destination BAP address of the first data packet, and the second BAP address is the BAP address allocated by the first donor node to the first IAB node; or the first BAP address is the destination BAP address of the first data packet, and the second BAP address is the BAP address allocated by the second donor node to the first IAB node.

When the second indication information indicates that the destination BAP address of the first data packet is allocated by the second donor node, the first IAB node may accurately determine, by determining whether the first condition is met, whether the first data packet needs to be submitted to the upper layer of the BAP layer of the first IAB node, to route the first data packet to the correct transmission path.

In a possible implementation, that the first IAB node processes the first data packet based on second indication information in the first data packet and a BAP topology to which the first IAB node belongs includes: When the second indication information indicates that the destination BAP address of the first data packet is allocated by the first donor node and a third BAP address does not match a fourth BAP address, the first IAB node forwards the first data packet based on the routing table, where the third BAP address is a destination BAP address of the first data packet, and the fourth BAP address is a BAP address allocated by the first donor node to the first IAB node.

When the second indication information indicates that the destination BAP address of the first data packet is allocated by the first donor node, the first IAB node may accurately determine, by determining whether the third BAP address matches the fourth BAP address, whether the first data packet needs to be submitted to the upper layer of the BAP layer of the first IAB node, to route the first data packet to the correct transmission path.

In a possible implementation, that the first IAB node processes the first data packet based on second indication information in the first data packet and a BAP topology to which the first IAB node belongs includes: When the second indication information indicates that the destination BAP address of the first data packet is allocated by the first donor node and a third BAP address matches a fourth BAP address, the first IAB node submits the first data packet to an upper layer of a BAP layer of the first IAB node, where the third BAP address is a destination BAP address of the first data packet, and the fourth BAP address is a BAP address allocated by the first donor node to the first IAB node.

When the second indication information indicates that the destination BAP address of the first data packet is allocated by the first donor node, the first IAB node may accurately determine, by determining whether the third BAP address matches the fourth BAP address, whether the first data packet needs to be submitted to the upper layer of the BAP layer of the first IAB node, to route the first data packet to the correct transmission path.

According to a fourth aspect, an embodiment of this application provides another routing method. The method is applied to an IAB network, the IAB network includes a first BAP topology and a second BAP topology, the first BAP topology is managed by a first donor node, the second BAP topology is managed by a second donor node, and the first donor node is different from the second donor node. The method may be performed by a fourth communication apparatus. The fourth communication apparatus may be a communication device or a communication apparatus that can support the communication device in implementing a function required by the method, for example, a chip system. The following uses an example in which the fourth communication apparatus is a first IAB node for description. The method includes:

The first IAB node receives a first data packet; and the first IAB node processes the first data packet based on third indication information in the first data packet, where the third indication information indicates to rewrite a BAP address of the first data packet, or the third indication information indicates not to rewrite a BAP address of the first data packet.

In this embodiment of this application, the first IAB node can accurately determine, based on the third indication information in the first data packet, whether to rewrite a BAP routing ID of the received first data packet, to route the first data packet to a correct path.

In a possible implementation, that the first IAB node processes the first data packet based on third indication information in the first data packet includes: When the third indication information indicates to rewrite the BAP address of the first data packet and a first condition is not met, the first IAB node forwards the first data packet based on a second BAP routing identifier and a routing table, where the first condition includes: a first BAP address matches a second BAP address, where the second BAP routing identifier is obtained by rewriting a first BAP routing identifier of the first data packet, and the first BAP routing identifier includes a destination BAP address and a path identifier of the first data packet; and the first BAP address is obtained by rewriting the destination BAP address of the first data packet, and the second BAP address is a BAP address allocated by the first donor node to the first IAB node; or the first BAP address is the destination BAP address of the first data packet, and the second BAP address is a BAP address allocated by the second donor node to the first IAB node.

When the third indication information indicates to rewrite the BAP address of the first data packet and the first condition is not met, the first IAB node forwards the first data packet, and rewrites the BAP routing identifier of the first data packet.

In this implementation, when the third indication information indicates to rewrite the BAP address of the first data packet and the first condition is not met, the first IAB node forwards the first data packet based on the second BAP routing identifier and the routing table, so that the first data packet can be routed to the correct path.

In a possible implementation, the first condition further includes: First indication information included in the first data packet indicates to submit the first data packet to an upper layer of a BAP layer of the first IAB node.

In this implementation, the first condition further includes: The first indication information included in the first data packet indicates to submit the first data packet to the upper layer of the BAP layer of the first IAB node. In this implementation, the first data packet is submitted to the upper layer of the BAP layer when the condition that the first indication information indicates to submit the first data packet to the upper layer of the BAP layer of the first IAB node. This can avoid incorrectly submitting the first data packet to the upper layer of the BAP layer of the first IAB node.

In a possible implementation, before the first IAB node forwards the first data packet based on the routing table, the method further includes: The first IAB node rewrites the first BAP routing identifier of the first data packet as the second BAP routing identifier. That the first IAB node forwards the first data packet based on the routing table includes: The first IAB node forwards the first data packet based on a next-hop BAP address that is in the routing table and that matches the second BAP routing identifier.

In this implementation, the first IAB node forwards the first data packet based on the next-hop BAP address that is in the routing table and that matches the second BAP routing identifier. Because the second BAP routing identifier is a BAP routing identifier that can be identified by a downstream node of the first IAB node, the first IAB node forwards the first data packet based on the next-hop BAP address that is in the routing table and that matches the second BAP routing identifier, and can route the first data packet to the correct transmission path.

In a possible implementation, that the first IAB node processes the first data packet based on third indication information in the first data packet includes: When the third indication information indicates to rewrite the BAP address of the first data packet and the first condition is met, the first IAB node submits the first data packet to an upper layer of a BAP layer of the first IAB node, where the first condition includes: the first BAP address matches the second BAP address, where the first BAP address is obtained by rewriting the destination BAP address of the first data packet, and the second BAP address is the BAP address allocated by the first donor node to the first IAB node; or the first BAP address is the destination BAP address of the first data packet, and the second BAP address is the BAP address allocated by the second donor node to the first IAB node.

When the third indication information indicates to rewrite the BAP address of the first data packet, the first IAB node may accurately determine, by determining whether the first condition is met, whether the first data packet needs to be submitted to the upper layer of the BAP layer of the first IAB node, to route the first data packet to the correct transmission path.

In a possible implementation, that the first IAB node processes the first data packet based on third indication information in the first data packet includes: When the third indication information indicates not to rewrite the BAP address of the first data packet and a third BAP address does not match a fourth BAP address, the first IAB node forwards the first data packet based on the routing table, where the third BAP address is a destination BAP address of the first data packet, and the fourth BAP address is a BAP address allocated by the first donor node to the first IAB node.

When the third indication information indicates not to rewrite the BAP address of the first data packet, the first IAB node may accurately determine, by determining whether the third BAP address matches the fourth BAP address, whether the first data packet needs to be submitted to the upper layer of the BAP layer of the first IAB node, to route the first data packet to the correct transmission path.

In a possible implementation, that the first IAB node processes the first data packet based on third indication information in the first data packet includes: When the third indication information indicates not to rewrite the BAP address of the first data packet and a third BAP address matches a fourth BAP address, the first IAB node submits the first data packet to an upper layer of a BAP layer of the first IAB node, where the third BAP address is a destination BAP address of the first data packet, and the fourth BAP address is a BAP address allocated by the first donor node to the first IAB node.

When the third indication information indicates not to rewrite the BAP address of the first data packet, the first IAB node may accurately determine, by determining whether the third BAP address matches the fourth BAP address, whether the first data packet needs to be submitted to the upper layer of the BAP layer of the first IAB node, to route the first data packet to the correct transmission path.

According to a fifth aspect, an embodiment of this application provides a communication method. The method is applied to an IAB network, the IAB network includes a first BAP topology and a second BAP topology, the first BAP topology is managed by a first donor node, the second BAP topology is managed by a second donor node, and the first donor node is different from the second donor node. The method may be performed by a fifth communication apparatus. The fifth communication apparatus may be a communication device or a communication apparatus that can support the communication device in implementing a function required by the method, for example, a chip system. The following uses an example in which the fifth communication apparatus is the first donor node for description. The method includes: The first donor node sends a first data packet, where the first data packet includes second indication information, and the second indication information indicates that a destination BAP address of the first data packet is allocated by the first donor node. Optionally, before sending the first data packet, the first donor node generates the first data packet based on to-be-sent data.

In this embodiment of this application, the first donor node sends the first data packet including the second indication information, so that a boundary node in the IAB network accurately determines, based on the second indication information, whether to rewrite a BAP routing identifier of the first data packet.

In a possible implementation, that the first donor node sends a first data packet includes: sending the first data packet to an IAB node in the second BAP topology.

In some embodiments, when the first donor node delivers a data packet by using a BAP topology managed by the first donor node, the data packet may not include indication information indicating that a destination BAP address of the data packet is allocated by the first donor node. In this way, resource overheads can be reduced, and an existing format of a data packet does not need to be modified.

In this implementation, the first donor node sends the first data packet including the second indication information to the IAB node in the second BAP topology, so that the boundary node in the IAB network accurately determines, based on the second indication information, that the BAP routing identifier of the first data packet needs to be rewritten.

In a possible implementation, that the first donor node sends a first data packet includes: sending the first data packet to an IAB node in the first BAP topology.

In this implementation, the first donor node sends the first data packet including the second indication information to the IAB node in the first BAP topology, so that the boundary node in the IAB network accurately determines, based on the second indication information, that the BAP routing identifier of the first data packet does not need to be rewritten.

According to a sixth aspect, an embodiment of this application provides a communication method. The method is applied to an IAB network, the IAB network includes a first BAP topology and a second BAP topology, the first BAP topology is managed by a first donor node, the second BAP topology is managed by a second donor node, and the first donor node is different from the second donor node. The method may be performed by a sixth communication apparatus. The sixth communication apparatus may be a communication device or a communication apparatus that can support the communication device in implementing a function required by the method, for example, a chip system. The following uses an example in which the sixth communication apparatus is the first donor node for description. The method includes: The first donor node sends a first data packet, where the first data packet includes third indication information, and the third indication information indicates to rewrite a BAP address of the first data packet, or the third indication information indicates not to rewrite a BAP address of the first data packet. Optionally, before sending the first data packet, the first donor node generates the first data packet based on to-be-sent data.

In this embodiment of this application, the first donor node sends the first data packet including the third indication information, so that a boundary node in the IAB network accurately determines, based on the third indication information, whether to rewrite a BAP routing identifier of the first data packet.

In a possible implementation, that the first donor node sends a first data packet includes: sending the first data packet to an IAB node in the second BAP topology, where the third indication information indicates to rewrite the BAP address of the first data packet.

In this implementation, the first data packet including the third indication information is sent to the IAB node in the second BAP topology, and the boundary node in the IAB network may accurately and quickly determine, based on the third indication information, that the BAP routing identifier of the first data packet does not need to be rewritten, to route the first data packet to a correct transmission path.

In a possible implementation, that the first donor node sends a first data packet includes: sending the first data packet to an IAB node in the first BAP topology, where the third indication information indicates not to rewrite the BAP address of the first data packet.

In this implementation, the first data packet including the third indication information is sent to the IAB node in the first BAP topology, and the boundary node in the IAB network may accurately and quickly determine, based on the third indication information, that the BAP routing identifier of the first data packet needs to be rewritten, to route the first data packet to a correct transmission path.

According to a seventh aspect, an embodiment of this application provides a communication apparatus. The communication apparatus has a function of implementing a behavior in the method embodiment of the first aspect. The function may be implemented by hardware, or may be implemented by hardware executing corresponding software. The hardware or the software includes one or more modules corresponding to the foregoing function. The communication apparatus may be a first IAB node (boundary node) in an IAB network. The IAB network includes a first BAP topology and a second BAP topology, the first BAP topology is managed by a first donor node, the second BAP topology is managed by a second donor node, the first donor node is different from the second donor node, at least one parent node of the first IAB node is managed by the second donor node, and the first IAB node belongs to the first BAP topology. In a possible implementation, a transceiver module and a processing module are included.

The transceiver module is configured to receive a first data packet.

The processing module is configured to process the first data packet based on a BAP topology corresponding to an ingress link for receiving the first data packet and the BAP topology to which the first IAB node belongs.

For technical effects brought by the seventh aspect or the possible implementations of the seventh aspect, refer to the descriptions of the technical effects brought by the first aspect or the possible implementations of the first aspect.

According to an eighth aspect, an embodiment of this application provides a communication apparatus. The communication apparatus has a function of implementing a behavior in the method embodiment of the second aspect. The function may be implemented by hardware, or may be implemented by hardware executing corresponding software. The hardware or the software includes one or more modules corresponding to the foregoing function. The communication apparatus may be a first IAB node in an IAB network, the IAB network includes a first BAP topology and a second BAP topology, the first BAP topology is managed by a first donor node, the second BAP topology is managed by a second donor node, the first donor node is different from the second donor node, the first IAB node is managed by the first donor node, and at least one parent node of the first IAB node is managed by the second donor node, and the first IAB node belongs to the first BAP topology. In a possible implementation, a transceiver module and a processing module are included.

The transceiver module is configured to receive a second data packet from a child node of the first IAB node.

The processing module is configured to: when obtaining a fourth BAP routing identifier that has a mapping relationship with a third BAP routing identifier of the second data packet, control, based on the fourth BAP routing identifier and a routing table, the transceiver module to forward the second data packet.

For technical effects brought by the eighth aspect or the possible implementations of the eighth aspect, refer to the descriptions of the technical effects brought by the second aspect or the possible implementations of the second aspect.

According to a ninth aspect, an embodiment of this application provides a communication apparatus. The communication apparatus has a function of implementing a behavior in the method embodiment of the third aspect. The function may be implemented by hardware, or may be implemented by hardware executing corresponding software. The hardware or the software includes one or more modules corresponding to the foregoing function. The communication apparatus may be a first IAB node in an IAB network, the IAB network includes a first BAP topology and a second BAP topology, the first BAP topology is managed by a first donor node, the second BAP topology is managed by a second donor node, the first donor node is different from the second donor node, the first IAB node is managed by the first donor node, and at least one parent node of the first IAB node is managed by the second donor node, and the first IAB node belongs to the first BAP topology. In a possible implementation, a transceiver module and a processing module are included.

The transceiver module is configured to receive a first data packet.

The processing module is configured to process the first data packet based on second indication information in the first data packet and the BAP topology to which the first IAB node belongs, where the second indication information indicates that a destination BAP address of the first data packet is allocated by the first donor node, or the second indication information indicates that a destination BAP address of the first data packet is allocated by the second donor node.

For technical effects brought by the ninth aspect or the possible implementations of the ninth aspect, refer to the descriptions of the technical effects brought by the third aspect or the possible implementations of the third aspect.

According to a tenth aspect, an embodiment of this application provides a communication apparatus. The communication apparatus has a function of implementing a behavior in the method embodiment of the fourth aspect. The function may be implemented by hardware, or may be implemented by hardware executing corresponding software. The hardware or the software includes one or more modules corresponding to the foregoing function. The communication apparatus may be a first IAB node in an IAB network, the IAB network includes a first BAP topology and a second BAP topology, the first BAP topology is managed by a first donor node, the second BAP topology is managed by a second donor node, the first donor node is different from the second donor node, the first IAB node is managed by the first donor node, and at least one parent node of the first IAB node is managed by the second donor node, and the first IAB node belongs to the first BAP topology. In a possible implementation, a transceiver module and a processing module are included.

The transceiver module is configured to receive a first data packet.

The processing module is configured to process the first data packet based on third indication information in the first data packet, where the third indication information indicates to rewrite a BAP address of the first data packet, or the third indication information indicates not to rewrite a BAP address of the first data packet.

For technical effects brought by the tenth aspect or the possible implementations of the tenth aspect, refer to the descriptions of the technical effects brought by the fourth aspect or the possible implementations of the fourth aspect.

According to an eleventh aspect, an embodiment of this application provides a communication apparatus. The communication apparatus has a function of implementing a behavior in the method embodiment of the fifth aspect. The function may be implemented by hardware, or may be implemented by hardware executing corresponding software. The hardware or the software includes one or more modules corresponding to the foregoing function. The communication apparatus may be a first donor node in an IAB network. The IAB network includes a first BAP topology and a second BAP topology, the first BAP topology is managed by the first donor node, the second BAP topology is managed by a second donor node, and the first donor node is different from the second donor node. In a possible implementation, a transceiver module and a processing module are included.

The processing module is configured to control the transceiver module to send a first data packet, where the first data packet includes second indication information, and the second indication information indicates that a destination BAP address of the first data packet is allocated by the first donor node.

In a possible implementation, the processing module is specifically configured to control the transceiver module to send the first data packet to an IAB node in the second BAP topology.

For technical effects brought by the eleventh aspect or the possible implementations of the eleventh aspect, refer to the descriptions of the technical effects brought by the fifth aspect or the possible implementations of the fifth aspect.

According to a twelfth aspect, an embodiment of this application provides a communication apparatus. The communication apparatus has a function of implementing a behavior in the method embodiment of the sixth aspect. The function may be implemented by hardware, or may be implemented by hardware executing corresponding software. The hardware or the software includes one or more modules corresponding to the foregoing function. The communication apparatus may be a first donor node in an IAB network. The IAB network includes a first BAP topology and a second BAP topology, the first BAP topology is managed by the first donor node, the second BAP topology is managed by a second donor node, and the first donor node is different from the second donor node. In a possible implementation, a transceiver module and a processing module are included.

The processing module is configured to control the transceiver module to send a first data packet, where the first data packet includes third indication information, and the third indication information indicates to rewrite a BAP address of the first data packet, or the third indication information indicates not to rewrite a BAP address of the first data packet.

In a possible implementation, the processing module is specifically configured to control the transceiver module to send the first data packet to an IAB node in the second BAP topology, where the third indication information indicates to rewrite the BAP address of the first data packet.

In a possible implementation, the processing module is specifically configured to control the transceiver module to send the first data packet to an IAB node in the first BAP topology, where the third indication information indicates not to rewrite the BAP address of the first data packet.

For technical effects brought by the twelfth aspect or the possible implementations of the twelfth aspect, refer to the descriptions of the technical effects brought by the sixth aspect or the possible implementations of the sixth aspect.

According to a thirteenth aspect, this application provides a communication apparatus. The communication apparatus includes a processor. The processor may be configured to execute computer-executable instructions stored in a memory, so that the method shown in any one of the first aspect or the possible implementations of the first aspect is performed, the method shown in any one of the second aspect or the possible implementations of the second aspect is performed, the method shown in any one of the third aspect or the possible implementations of the third aspect is performed, the method shown in any one of the fourth aspect or the possible implementations of the fourth aspect is performed, the method shown in any one of the fifth aspect or the possible implementations of the fifth aspect is performed, or the method shown in any one of the sixth aspect or the possible implementations of the sixth aspect is performed.

In an embodiment of this application, in a process of performing the foregoing method, a process of sending information in the foregoing method may be understood as a process in which information is output based on instructions of the processor. When outputting the information, the processor outputs the information to a transceiver, so that the transceiver may perform transmission. After the information is output by the processor, other processing may be further performed on the information, and then the information arrives at the transceiver. Similarly, when the processor receives input information, the transceiver receives the information, and inputs the information into the processor. Further, after the transceiver receives the information, other processing may need to be performed on the information before the information is input into the processor.

Operations such as sending and/or receiving related to the processor may be generally understood as output based on instructions of the processor, unless otherwise specified, or if the operations do not conflict with actual functions or internal logic of the operations in related descriptions.

In an implementation process, the processor may be a processor specially configured to perform these methods, or may be a processor that executes computer instructions in a memory to perform these methods, for example, a general-purpose processor. For example, the processor may be further configured to execute a program stored in the memory, and when the program is executed, the communication apparatus is enabled to perform the method shown in any one of the first aspect or the possible implementations of the first aspect.

In a possible implementation, the memory is located outside the communication apparatus.

In a possible implementation, the memory is located inside the communication apparatus.

In this embodiment of this application, the processor and the memory may alternatively be integrated into one device, in other words, the processor and the memory may alternatively be integrated together.

In a possible implementation, the communication apparatus further includes a transceiver. The transceiver is configured to receive a packet, send a packet, and the like.

According to a fourteenth aspect, this application provides a communication apparatus. The communication apparatus includes a processing circuit and an interface circuit. The interface circuit is configured to obtain data or output data. The processing circuit is configured to perform the corresponding method shown in any one of the first aspect or the possible implementations of the first aspect, the processing circuit is configured to perform the corresponding method shown in any one of the second aspect or the possible implementations of the second aspect, the processing circuit is configured to perform the corresponding method shown in any one of the third aspect or the possible implementations of the third aspect, the processing circuit is configured to perform the corresponding method shown in any one of the fourth aspect or the possible implementations of the fourth aspect, the processing circuit is configured to perform the corresponding method shown in any one of the fifth aspect or the possible implementations of the fifth aspect, or the processing circuit is configured to perform the corresponding method shown in any one of the sixth aspect or the possible implementations of the sixth aspect.

According to a fifteenth aspect, this application provides a computer-readable storage medium. The computer-readable storage medium is configured to store a computer program. When the computer program is run on a computer, the method shown in any one of the first aspect or the possible implementations of the first aspect is performed, the method shown in any one of the second aspect or the possible implementations of the second aspect is performed, the method shown in any one of the third aspect or the possible implementations of the third aspect is performed, the method shown in any one of the fourth aspect or the possible implementations of the fourth aspect is performed, the method shown in any one of the fifth aspect or the possible implementations of the fifth aspect is performed, or the method shown in any one of the sixth aspect or the possible implementations of the sixth aspect is performed.

According to a sixteenth aspect, this application provides a computer program product. The computer program product includes a computer program or computer code. When the computer program product runs on a computer, the method shown in any one of the first aspect or the possible implementations of the first aspect is performed, the method shown in any one of the second aspect or the possible implementations of the second aspect is performed, the method shown in any one of the third aspect or the possible implementations of the third aspect is performed, the method shown in any one of the fourth aspect or the possible implementations of the fourth aspect is performed, the method shown in any one of the fifth aspect or the possible implementations of the fifth aspect is performed, or the method shown in any one of the sixth aspect or the possible implementations of the sixth aspect is performed.

According to a seventeenth aspect, this application provides a communication system. The communication system includes a first donor node, a second donor node, a first IAB node, one or more IAB nodes controlled by the first donor node, and one or more IAB nodes controlled by the second donor node. The first donor node is different from the second donor node, and the first IAB node is configured to perform the method in any one of the first aspect to the fourth aspect.

### BRIEF DESCRIPTION OF DRAWINGS

To describe the technical solutions in embodiments of this application or in the background more clearly, the following describes the accompanying drawings for describing embodiments of this application or the background.
FIG. 1 is a schematic diagram of a structure of an IAB system according to an embodiment of this application;
FIG. 2 is a schematic diagram of a structure of an IAB node according to an embodiment of this application;
FIG. 3 is a schematic diagram of a structure of an IAB network according to an embodiment of this application;
FIG. 4 is a schematic diagram of a control plane protocol architecture in an IAB network according to an embodiment of this application;
FIG. 5 is a schematic diagram of a user plane protocol architecture in an IAB network according to an embodiment of this application;
FIG. 6 shows an example of an IAB network architecture diagram according to an embodiment of this application;
FIG. 7 shows an example of a BAP topology of an IAB network according to an embodiment of this application;
FIG. 8 is a flowchart of a routing method according to an embodiment of this application;
FIG. 9 is a flowchart of another routing method according to an embodiment of this application;
FIG. 10 is a flowchart of another routing method according to an embodiment of this application;
FIG. 11 is a flowchart of another routing method according to an embodiment of this application;
FIG. 12 is a flowchart of another routing method according to an embodiment of this application;
FIG. 13 is a flowchart of another routing method according to an embodiment of this application;
FIG. 14 is a schematic diagram of a structure of a communication apparatus according to an embodiment of this application;
FIG. 15 is a schematic diagram of a structure of a communication apparatus according to an embodiment of this application;
FIG. 16 is another schematic diagram of a structure of a communication apparatus according to an embodiment of this application; and
FIG. 17 is a schematic diagram of a structure of another communication apparatus according to an embodiment of this application.

### DESCRIPTION OF EMBODIMENTS

In the specification, claims, and accompanying drawings of this application, the terms "first", "second", and the like are merely intended to distinguish between different objects, but do not limit a sequence, a time sequence, priorities, or importance of a plurality of objects. In embodiments of this application, "a plurality of' means two or more than two. In addition, the terms "including" and "having" and any other variants thereof are intended to cover non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device. In addition, the character "/" generally indicates an "or" relationship between the associated objects unless otherwise specified.

"Embodiment" mentioned in this specification means that a particular feature, structure, or characteristic described with reference to the embodiment may be included in at least one embodiment of this application. The phrase shown in various locations in this specification may not necessarily refer to a same embodiment, and is not an independent or optional embodiment exclusive from another embodiment. It is explicitly and implicitly understood by a person skilled in the art that embodiments described in this specification may be combined with another embodiment.

Before this application is described, some terms of embodiments of this application are first briefly explained and described, to help a person skilled in the art have a better understanding.
(1) A terminal-side device is a device that provides a voice and/or data connectivity for a user. In embodiments of this application, the terminal-side device may be referred to as a user equipment (user equipment, UE), a terminal device, a terminal, a mobile station (mobile station, MS), a mobile terminal (mobile terminal, MT), or the like. For example, the terminal-side device may include a handheld device with a wireless connection function, or a communication device connected to a wireless modem. The terminal-side device may communicate with a core network via a radio access network (radio access network, RAN), and exchange a voice and/or data with the RAN.

Some examples of the terminal-side device are: a mobile station (mobile station, MS), a subscriber unit (subscriber unit), a cellular phone (cellular phone), a smartphone (smartphone), a wireless data card, a personal digital assistant (personal digital assistant, PDA), a computer, a tablet computer, a wireless modem (modem), a handheld device (handset), a laptop computer (laptop computer), a machine type communication (machine type communication, MTC) terminal, a wearable device, and a vehicle-mounted terminal device. The terminal-side device further includes a limited device, for example, a device with low power consumption, a device with a limited storage capability, or a device with a limited computing capability. The terminal-side device further includes information sensing devices such as a barcode, radio frequency identification (radio frequency identification, RFID), a sensor, a global positioning system (global positioning system, GPS), and a laser scanner.

A function of the terminal-side device may be implemented by a hardware component in the terminal device. The hardware component may be a processor and/or a programmable chip in the terminal device. Optionally, the chip may be implemented by an application-specific integrated circuit (application-specific integrated circuit, ASIC) or a programmable logic device (programmable logic device, PLD). The PLD may be any one of a complex programmable logic device (complex programmable logic device, CPLD), a field-programmable gate array (field-programmable gate array, FPGA), generic array logic (generic array logic, GAL), and a system on a chip (system on a chip, SOC), or any combination thereof.

(2) A donor gNodeB (donor gNodeB) may also be referred to as a donor node, and a core network may be accessed via the donor node. In other words, the donor gNodeB is a device that connects the terminal-side device to the core network in a communication system. The donor gNodeB is usually connected to the core network through a wired link (for example, an optical fiber cable). The donor gNodeB may be responsible for receiving data from the core network and forwarding the data to a wireless backhaul apparatus (for example, an IAB node), or receiving data from the wireless backhaul apparatus and forwarding the data to the core network. Usually, the donor gNodeB may be connected to a network in a wired manner.

In an example, the donor gNodeB may include a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an evolved NodeB (NodeB, eNB, or e-NodeB, evolved NodeB) in an LTE-advanced (LTE-Advanced, LTE-A) system, a next generation NodeB (next generation NodeB, gNB) in a 5^{th} generation mobile communication technology (5^{th} generation, 5G) new radio (new radio, NR) system, or the like. In another example, the donor gNodeB may include a central unit (central unit, CU) (Donor-CU or gNB-CU for short in this application) and a distribution unit (distributed unit, DU) (Donor-DU or gNB-DU for short in this application). The gNB-CU and the gNB-DU are connected through an F1 interface. The F1 interface may further include a control plane interface (F1-C) and a user plane interface (F1-U). The Donor-CU and the core network are connected through a next generation (next generation, NG) interface. The gNB-CU or the donor-CU may alternatively exist in a form in which a user plane (User plane, UP) (CU-UP for short in this application) and a control plane (Control plane, CP) (CU-CP for short in this application) are separated. In other words, the gNB-CU or the donor-CU includes the CU-CP and the CU-UP. One gNB-CU may include one gNB-CU-CP and at least one gNB-CU-UP. Alternatively, one donor-CU may include one donor-CU-CP and at least one donor-CU-UP.

A function of the donor gNodeB may be implemented by a hardware component in the donor gNodeB, for example, a processor and/or a programmable chip in the donor gNodeB. For example, the chip may be implemented by an ASIC or a PLD. The PLD may be any one of a CPLD, an FPGA, GAL, and a SOC or any combination thereof.

The following describes technical features related to embodiments of this application.

In an IAB network, an IAB node may establish a wireless backhaul link to one or more upper-level nodes, and access a core network via the upper-level node. The upper-level node may control (for example, perform data scheduling, timing modulation, and power control on) a relay node by using a plurality of types of signaling. In addition, the relay node may establish an access link to one or more lower-level nodes, and provide an access service for the one or more lower-level nodes. The upper-level node of the relay node may be a base station, or may be another relay node. The lower-level node of the relay node may be a terminal, or may be another relay node. In some cases, an upper-level node of an IAB node may also be referred to as an upstream node or a parent node of the IAB node, and a lower-level node of the IAB node may also be referred to as a downstream node or a child node of the IAB node.

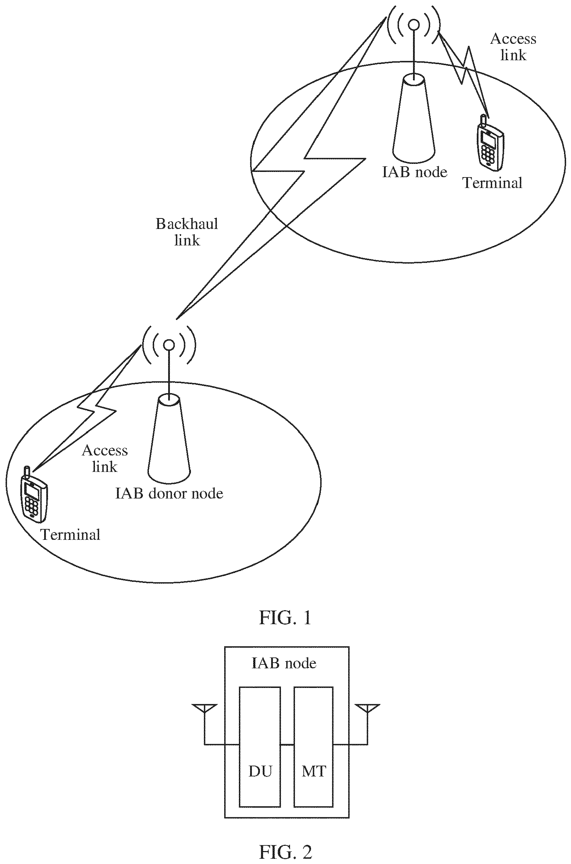

FIG. 1 shows an IAB system. An IAB node provides wireless access and wireless backhaul of an access service for a UE. An IAB donor node (IAB donor node) provides a wireless backhaul function for the IAB node and provides an interface between the UE and a core network. The IAB node is connected to the IAB donor node through a wireless backhaul link, so that the UE served by the IAB node is connected to the core network.

FIG. 2 is a schematic diagram of a structure of an IAB node. The IAB node in NR may be divided into two parts: an MT and a DU. The MT may also be understood as a component similar to a UE in the IAB node, and the MT is referred to as a function of camping on the IAB node. Because the MT is similar to a function of a common UE, it may be understood as that the MT is used for communication between the IAB node and an upper-level node. The DU is relative to a CU function of a network device, and the DU is used for communication between the IAB node and a lower-level node. It should be understood that the upper-level node may be a base station or another IAB node, and the lower-level node may be a UE or another IAB node.

A routing method provided in embodiments of this application may be used in various communication systems including a relay node, for example, an NR system, an LTE system, an LTE-A system, worldwide interoperability for microwave access (worldwide interoperability for microwave access, WiMAX), or a wireless local area network (wireless local area network, WLAN). In LTE, the relay node is generally referred to as an RN. In NR, the relay node is generally referred to as an IAB node. In some embodiments, the relay node may also be referred to as a relay device or a relay transmission reception point (relay transmission reception point, rTRP), and an upper-level node of the relay node may be a network device (including a DU of the network device, a CU of the network device, or the like).

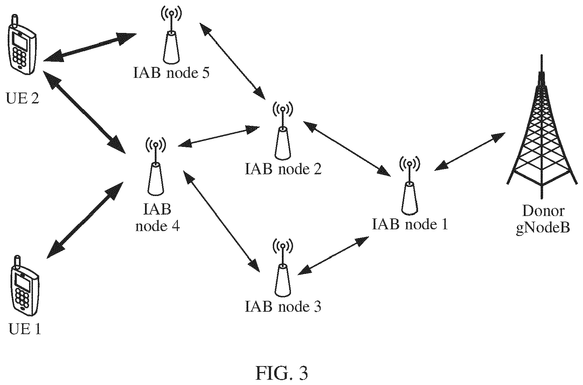

FIG. 3 shows an example of an IAB network including a plurality of UEs and a plurality of IAB nodes. An example in which two UEs and five IAB nodes are included is used in FIG. 3. The two UEs are a UE 1 and a UE 2 respectively, and the five IAB nodes are an IAB node 1 to an IAB node 5 respectively. It should be understood that in FIG. 3, a thick line represents an access link, and a thin line represents a backhaul link. The UE 2 may be connected to a donor gNodeB via the IAB node 5, the IAB node 2, and the IAB node 1. The UE 2 may also be connected to the donor gNodeB via the IAB node 4, the IAB node 2, and the IAB node 1. Alternatively, the UE 2 may be connected to the donor gNodeB via the IAB node 4, the IAB node 3, and the IAB node 1. The UE 1 may be connected to the donor gNodeB via the IAB node 4, the IAB node 3, and the IAB node 1. The UE 1 may be connected to the donor gNodeB via the IAB node 4, the IAB node 2, and the IAB node 1.

It should be noted that the communication system shown in FIG. 3 is merely an example, and constitutes no limitation on an application scenario to which embodiments of this application are applicable. It should be understood that the IAB node used in embodiments of this application is merely for a description purpose, and does not indicate that the solutions in embodiments of this application are used only in an NR scenario. In embodiments of this application, the IAB node may be generally any node or device having a relay function. It should be understood that use of the IAB node and use of the relay node in embodiments of this application have a same meaning.

In the IAB network, the IAB node is connected to a core network via an IAB donor node. For example, in a 5G architecture of standalone (standalone, SA) networking, an IAB node is connected to a 5G core network (SG core network, SGC/SGCN) via an IAB donor node. For another example, in a 5G architecture of dual connectivity (dual connectivity, DC) or multi-connectivity (multi-connectivity, MC) (for example, in a non-standalone (non-standalone, NSA) networking scenario), on a primary path, an IAB node may be connected to an evolved packet core (evolved packet core, EPC) network via an evolved NodeB (evolved NodeB, eNB), or may be connected to a 5G core network via an IAB donor.

In the IAB network, one or more IAB nodes may be included on a transmission path between a UE and an IAB donor. Each IAB node needs to maintain a wireless backhaul link oriented to a parent node, and further needs to maintain a wireless link between the IAB node and a child node. If the child node of the IAB node is a UE, a wireless access link exists between the IAB node and the child node (that is, the UE) of the IAB node. If the child node of the IAB node is another IAB node, a wireless backhaul link exists between the IAB node and the child node (that is, the another IAB node) of the IAB node. Refer to FIG. 3. On a path "UE 1→IAB node 4→IAB node 3→IAB node 1→IAB donor", the UE 1 accesses the IAB node 4 through a wireless access link, the IAB node 4 is connected to the IAB node 3 through a wireless backhaul link, the IAB node 3 is connected to the IAB node 1 through a wireless backhaul link, and the IAB node 1 is connected to the IAB donor node through a wireless backhaul link.

In this embodiment of this application, an access IAB node is an IAB node accessed by the UE, and an intermediate IAB node is an IAB node that provides a wireless backhaul service for the UE or the IAB node. For example, with reference to FIG. 3, on the path "UE 1→IAB node 4→IAB node 3→IAB node 1→IAB donor", the IAB node 4 is an access IAB node, and the IAB node 3 and the IAB node 1 are intermediate IAB nodes. It should be noted that an IAB node is an access IAB node for a UE accessing the IAB node, and is an intermediate IAB node for a UE accessing another IAB node. Therefore, whether an IAB node is specifically an access IAB node or an intermediate IAB node is not fixed and may be determined based on a specific application scenario.

There is an F1 interface between a DU of the IAB node and a CU of the IAB donor. The F1 interface may include two parts: a control plane part and a user plane part. The user plane part is maintained between an IAB-DU and an IAB donor CU-UP, and the control plane part is maintained between the IAB-DU and an IAB donor CU-CP. Certainly, the F1 interface may also be referred to as an F1* interface. A name of the interface is not limited in this embodiment of this application. In this specification, an example in which the interface is referred to as an F1 interface is used.

The F1 interface may support a user plane protocol (F1-U/F1*-U) and a control plane protocol (F1-C/F1*-C). The user plane protocol includes one or more of the following protocol layers: a general packet radio service (general packet radio service, GPRS) tunneling protocol user plane (GPRS tunneling protocol user plane, GTP-U) protocol layer, a user datagram protocol (user datagram protocol, UDP) protocol layer, an internet protocol (internet protocol, IP) protocol layer, and the like. The control plane protocol includes one or more of the following protocol layers: an F1 application protocol (F1 application protocol, F1AP), a stream control transport protocol (stream control transport protocol, SCTP), an IP protocol layer, and the like. Through a control plane of the F1/F1* interface, the IAB node and the IAB donor may perform interface management, manage the IAB-DU, perform UE context-related configuration, and the like. Through a user plane of the F1/F1* interface, the IAB node and the IAB donor may perform functions such as user plane data transmission and downlink transmission status feedback.

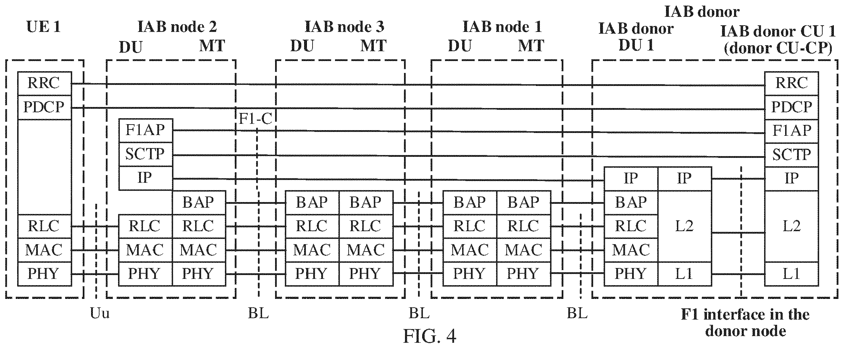

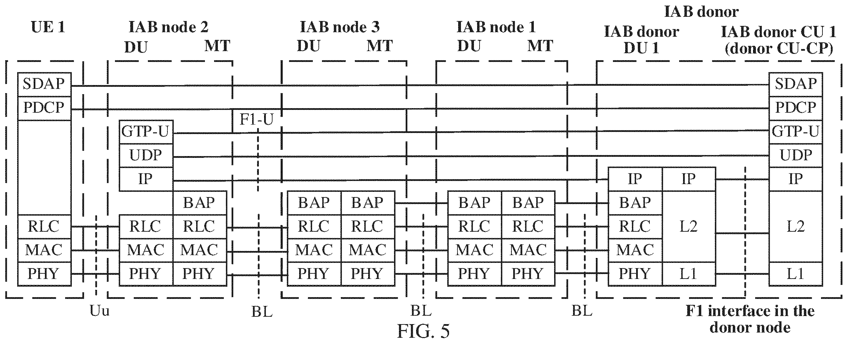

For example, FIG. 4 is a schematic diagram of a control plane protocol architecture in an IAB network, and FIG. 5 is a schematic diagram of a user plane protocol architecture in an IAB network.

For a control plane, as shown in FIG. 4, a Uu interface is established between a UE 1 and an IAB 2-DU, and peer protocol layers include a radio link control (radio link control, RLC) protocol layer, a media access control (media access control, MAC) layer, and a physical layer (physical layer, PHY). An F1-C interface is established between the IAB 2-DU and an IAB donor CU 1, and peer protocol layers include an F1AP layer and an SCTP layer. An IAB donor DU 1 and the IAB donor CU 1 are connected in a wired manner, and peer protocol layers include an internet protocol (internet protocol, IP) layer, L2, and L1. BLs are established between an IAB node 2 and an IAB node 3, between the IAB node 3 and an IAB node 1, and between the IAB node 1 and an IAB donor DU 1. Peer protocol layers include a backhaul adaptation protocol (backhaul adaptation protocol, BAP) layer, an RLC layer, a MAC layer, and a PHY layer. In addition, a peer radio resource control (radio resource control, RRC) layer and a peer packet data convergence protocol (packet data convergence protocol, PDCP) layer are established between the UE 1 and the IAB donor CU 1, and a peer IP layer is established between the IAB 2-DU and the IAB donor DU 1.

It can be learned that, compared with a control plane protocol stack of a single air interface, in the control plane protocol stack in the IAB network, a DU of an access IAB node implements functions of a gNB-DU of the single air interface (namely, functions of establishing a peer RLC layer, MAC layer, and PHY layer to a UE and establishing a peer F1AP layer and SCTP layer to a CU). In other words, the DU of the access IAB node in the IAB network implements a function of the gNB-DU of the single air interface, and the IAB donor CU implements a function of a gNB-CU of the single air interface.

On the control plane, an RRC message is encapsulated in an F1AP message between the access IAB node and the IAB donor CU for transmission. Specifically, in an uplink direction, the UE 1 encapsulates the RRC message in a PDCP protocol data unit (protocol data unit, PDU), and sends the PDCP PDU to the IAB 2-DU after processing at the RLC layer, the MAC layer, and the PHY layer in sequence. The IAB 2-DU obtains the PDCP PDU after processing at the PHY layer, the MAC layer, and the RLC layer in sequence, and encapsulates the PDCP PDU in an F1AP message, and an IP packet is obtained after processing at the SCTP layer and the IP layer in sequence. An IAB 2-MT processes the IP packet at the BAP layer, the RLC layer, the MAC layer, and the PHY layer respectively, and then sends the IP packet to an IAB 3-DU. The IAB 3-DU obtains the IP packet after processing at the PHY layer, the MAC layer, the RLC layer, and the BAP layer in sequence, and then an IAB 3-MT sends the IP packet to an IAB 1-DU by using an operation similar to that of the IAB 2-MT. Similarly, an IAB 1-MT sends the IP packet to the IAB donor DU 1. After obtaining the IP packet through parsing, the IAB donor DU 1 sends the IP packet to the IAB donor CU 1. The IAB donor CU 1 obtains the RRC message after processing is sequentially performed on the IP packet at the SCTP layer, the F1AP layer, and the PDCP layer. Operations in a downlink direction are similar. Details are not described herein again.

For a user plane, as shown in FIG. 5, a Uu interface is established between the UE 1 and the IAB 2-DU, and peer protocol layers include an RLC layer, a MAC layer, and a PHY layer. An F1-U interface is established between the IAB 2-DU and the IAB donor CU 1, and peer protocol layers include a GTP-U layer and a user datagram protocol (user datagram protocol, UDP) layer. The IAB donor DU 1 and the IAB donor CU 1 are connected in a wired manner, and peer protocol layers include an IP layer, L2, and L1. BLs are established between the IAB node 2 and the IAB node 3, between the IAB node 3 and the IAB node 1, and between the IAB node 1 and the IAB donor DU 1. Peer protocol layers include a BAP layer, an RLC layer, a MAC layer, and a PHY layer. In addition, a peer SDAP layer and a peer PDCP layer are established between the UE 1 and the IAB donor CU 1, and a peer IP layer is established between the IAB 2-DU and the IAB donor DU 1.

It can be learned that, compared with a user plane protocol stack of a single air interface, in the user plane protocol stack in the IAB network, the DU of the access IAB node implements some functions of the gNB-DU of the single air interface (namely, functions of establishing a peer RLC layer, a peer MAC layer, and a peer PHY layer to the terminal and establishing a peer GTP-U layer and a peer UDP layer to the IAB donor CU 1). It may be understood that the DU of the access IAB node implements a function of the gNB-DU of the single air interface, and the IAB donor CU implements a function of the gNB-CU of the single air interface.

On the user plane, a PDCP data packet is encapsulated in a GTP-U tunnel between the access IAB node and the IAB donor CU for transmission. The GTP-U tunnel is established on the F1-U interface.

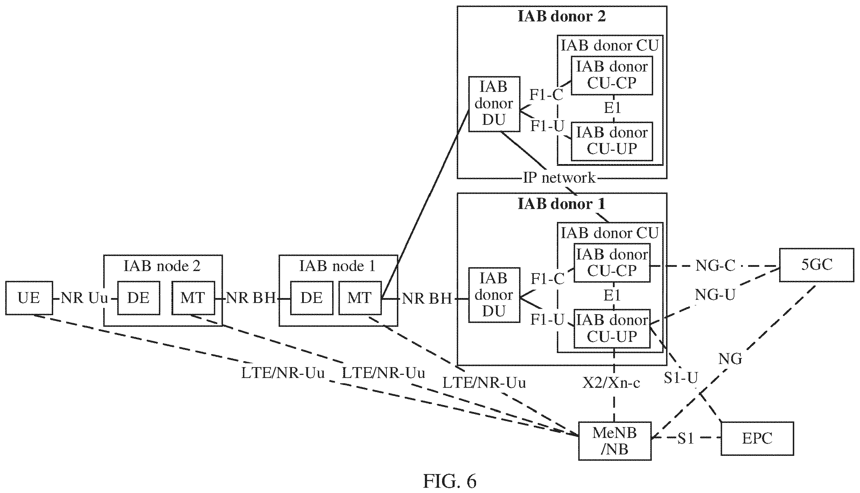

The routing method provided in this application is mainly applied to an IAB network, including an IAB network with standalone (SA) networking and an IAB network with non-standalone (NSA) networking. The IAB node includes an MT part and a DU part. The IAB donor may be further divided into a DU part and a CU part, and the CU may be further divided into a CU-CP part and a CU-UP part. FIG. 6 shows an example of an IAB network architecture diagram according to an embodiment of this application. FIG. 6 shows an example in which an IAB node is connected to an IAB donor through a wireless backhaul link.

In FIG. 6, an example in which one UE, two IAB nodes, and two IAB donors are included is used. The two IAB nodes are an IAB node 1 and an IAB node 2, the two IAB nodes each include an MT part and a DU part, and the two IAB donors are an IAB donor 1 and an IAB donor 2 respectively. The two IAB donors are the IAB donor 1 and the IAB donor 2. Each IAB donor may be further divided into a DU part and a CU part, and the CU may be further divided into a CU-CP part and a CU-UP part. In FIG. 6, communication is performed between the MT of the IAB node 2 and the DU of the IAB node 1, between the MT of the IAB node 1 and the DU of the IAB donor 1, and between the MT of the IAB node 1 and the DU of the IAB donor 2 through a wireless backhaul (backhaul, BH) link (link); a Uu interface is established between the UE and the IAB 2-DU. An F1-C interface is established between an IAB donor DU and an IAB donor CU-CP, an F1-U interface is established between the IAB donor DU and an IAB donor CU-UP, and the DU of the IAB donor 2 is connected to the CU of the IAB donor 1 through an IP network.

When an IAB node works in an SA mode, the IAB node may be single-connected to one parent node or dual-connected to two parent nodes. The two parent nodes may be controlled by a same IAB donor, or may be respectively controlled by different IAB donors. An F1 interface needs to be established between a DU part of the IAB node and an IAB donor, and the IAB donor may be connected to a 5G core network, that is, a dashed line part in FIG. 6. The IAB donor CU-CP is connected to a control plane network element (for example, an access and mobility management function) in the SGC through an NG control plane interface (NG-C), and the IAB donor CU-UP is connected to a user plane network element (for example, a user plane function) in the SGC through an NG user plane interface (NG-U).

When an IAB node works in an NSA mode, the IAB donor CU-UP may be connected to an EPC (for example, connected to a serving gateway (serving gateway, SGW)) through an S1 user plane interface (S1-U), an MeNB is connected to an MT of the IAB node through an LTE Uu air interface, an X2-C interface exists between the MeNB and the IAB donor CU-CP, and the MeNB is connected to the EPC through an S1 interface (including an S1 interface user plane and an S1 interface control plane).

In another possible case, the MeNB in FIG. 6 may alternatively be replaced with a 5G base station gNB. The LTE-Uu interface in FIG. 6 is correspondingly replaced with an NR-Uu interface. A user plane interface and/or a control plane interface may be established between the gNB and the 5GC. The gNB and the IAB donor provide a dual-connectivity service for the IAB node. The gNB may serve as a primary base station of the IAB node or a secondary base station of the IAB node.

The routing method provided in this application is used to resolve a data forwarding problem of a boundary node (boundary node) in the IAB network. In other words, the routing method provided in this application is used to resolve a problem of how a boundary node in the IAB network routes, to a correct path, a data packet passing through the boundary node. The boundary node in the IAB network may be referred to as a boundary IAB node, or referred to as a boundary node for short. The boundary node in the IAB network has the following feature: an IAB donor CU to which a DU of the boundary node is terminated is different from an IAB donor CU to which a DU of at least one parent node of the boundary node is terminated. The boundary IAB node (Boundary IAB node) may be defined as follows: IAB node, whose IAB-DU is terminated to a different IAB donor CU than a parent DU. Assuming that an IAB node in the IAB network has two parent nodes, a DU of the IAB node is terminated to a CU of an IAB donor 1, a DU of a parent node of the IAB node is terminated to the CU of the IAB donor 1, and a DU of the other parent node of the IAB node is terminated to a CU of an IAB donor 2, the IAB node is a boundary node.

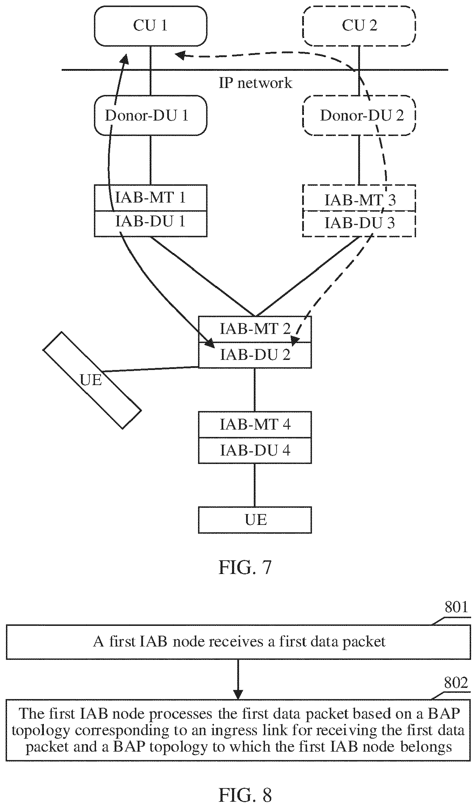

FIG. 7 shows an example of a BAP topology of an IAB network according to an embodiment of this application. In this application, the BAP topology is a topology of a BAP layer. In FIG. 7, an IAB-MT 1 and an IAB-DU 1 are two parts included in an IAB node 1, an IAB-MT 2 and an IAB-DU 2 are two parts included in an IAB node 2, an IAB-MT 3 and an IAB-DU 3 are two parts included in an IAB node 3, and an IAB-MT 4 and an IAB-DU 4 are two parts included in an IAB node 4. As shown in FIG. 7, a topology in a solid-line box represents a BAP topology 1 controlled by a donor-CU 1, and a topology in a dashed-line box represents a BAP topology 2 controlled by a donor-CU 2. The BAP topology 1 includes the IAB node 1, the IAB node 2, and the IAB node 4, and the BAP topology 2 includes the IAB node 3. In FIG. 7, the MT of the IAB node 2, that is, the IAB-MT 2, is dual-connected to a donor-DU 1 and a donor-DU 2. An F1 interface of the IAB node 2 is terminated to the CU 1, that is, the CU 1 is an F1-termination node of the IAB node 2. For such a BAP topology, a service of an IAB node or a service of a UE connected to the IAB node may be transmitted via several different types of nodes. These different types of nodes may include an IAB node (for example, the IAB node 4) managed by the CU 1 and an IAB node (for example, the IAB node 3) managed by the CU 2.

As shown in FIG. 7, the IAB node 2 may receive a data packet delivered by the CU 1 via the donor-DU 1 and the IAB node 1 (refer to a path indicated by a solid-line arrow in FIG. 7), or may receive a data packet delivered by the CU 1 via the donor-DU 2 and the IAB node 3 (refer to a path indicated by a dashed-line arrow in FIG. 7). The IAB node 2 is a boundary node in the IAB network shown in FIG. 7. Because an F1 interface of the IAB node 2 is terminated to the CU 1 (the DU of the IAB node 2 is terminated to the CU 1), a DU of a parent node (the IAB node 3) of the IAB node 2 is terminated to the CU 2.

The IAB node 2 serves as a boundary node, and needs to route, to a correct path, a data packet passing through the IAB node 2. In FIG. 7, a BAP routing ID that can be identified by each IAB node in the BAP topology 1 controlled (or managed) by the CU 1 is different from a BAP routing ID that can be identified by each IAB node in the BAP topology 2 controlled (or managed) by the CU 2. In other words, the BAP routing ID that can be identified by each IAB node in the BAP topology 1 is unidentifiable to each IAB node in the BAP topology 2 controlled (or managed) by the CU 2. Similarly, the BAP routing ID that can be identified by each IAB node in the BAP topology 2 is also unidentifiable to each IAB node in the BAP topology 1 controlled by the CU 1. For a downlink data packet, the IAB node 2 needs to rewrite a BAP routing ID of a data packet from the BAP topology 2, and then forwards the data packet to a downstream node after converting the BAP routing ID into a BAP routing ID that can be identified by the IAB node in the BAP topology 1. Similarly, for an uplink data packet, if a data packet received by the IAB node 2 needs to be transmitted through the BAP topology 2, the IAB node 2 needs to rewrite a BAP routing ID of the data packet in the original BAP topology 1 as a BAP routing ID that can be identified by the IAB node in the BAP topology 2, so that the data packet can be forwarded to an upstream IAB node of the IAB node 2 in the BAP topology 2. It can be learned that, for a boundary node (for example, the IAB node 2) in the IAB network, if a data packet passing through the boundary node needs to be routed to a correct path, whether a BAP routing ID of the data packet needs to be rewritten needs to be accurately determined. According to the routing method provided in this application, whether the BAP routing ID of the data packet needs to be rewritten can be accurately determined, and the data packet passing through the boundary node can be routed to the correct path.

The following describes a routing method provided in embodiments of this application with reference to the accompanying drawings. FIG. 8 is a flowchart of a routing method according to an embodiment of this application. The routing method provided in this embodiment of this application may be applied to an IAB network, the IAB network includes a first BAP topology and a second BAP topology, the first BAP topology is managed by a first donor node, the second BAP topology is managed by a second donor node, and the first donor node is different from the second donor node. As shown in FIG. 8, the method includes the following steps.

801: A first IAB node receives a first data packet.

The first IAB node is managed by the first donor node, and at least one parent node of the first IAB node is managed by the second donor node. In other words, the first IAB node is a boundary node in the IAB network. The first IAB node belongs to the first BAP topology. The first data packet may be a downlink data packet, that is, a data packet from an upstream node of the first IAB node.

The IAB network shown in FIG. 7 may be an example of the IAB network to which the method in FIG. 8 is applicable. The first BAP topology is corresponding to a BAP topology 1, the second BAP topology is corresponding to a BAP topology 2, the first donor node is corresponding to a CU 1, the second donor node is corresponding to a CU 2, and the first IAB node is corresponding to an IAB node 2.

In a possible implementation, the method further includes: When a radio link failure (radio link failure, RLF) occurs on a first radio link between the first IAB node and a parent node of the first IAB node, the first IAB node sends fourth indication information to a child node of the first IAB node in a process of or before recovering (recovery) the first radio link, where the fourth indication information indicates that the RLF occurs on the first IAB node and time of sending the fourth indication information is in the process of or before recovering the first radio link. A granularity of the fourth indication information may be a BAP address (address) or a backhaul (backhaul, BH) link (link). In this implementation, the first IAB node may notify the child node of the first IAB node in time that the RLF occurs between the first IAB node and the parent node of the first IAB node. Further, after the first radio link between the first IAB node and the foregoing first parent node is successfully recovered, the first IAB node sends fifth indication information to the child node of the first IAB node, where the fifth indication information indicates that the RLF of the first IAB node is successfully recovered. In this implementation, the first IAB node sends the fifth indication information to the child node of the first IAB node, and may notify the child node of the first IAB node that the RLF is successfully recovered.

802: The first IAB node processes the first data packet based on a BAP topology corresponding to an ingress link for receiving the first data packet and the BAP topology to which the first IAB node belongs.

The BAP topology corresponding to the ingress link used by the first IAB node to receive the first data packet may be a BAP topology to which an IAB node sending the first data packet to the first IAB node belongs. The BAP topology corresponding to the ingress link used by the first IAB node to receive the first data packet may be one of the first BAP topology and the second BAP topology. In some embodiments, after receiving the first data packet, the first IAB node may use the BAP topology to which the IAB node sending the first data packet belongs as the BAP topology corresponding to the ingress link for receiving the first data packet. For example, the first IAB node receives the first data packet sent by an upstream node 1 of the first IAB node, and a BAP topology to which the upstream node 1 belongs is the BAP topology corresponding to the ingress link used by the first IAB node to receive the first data packet. Because the BAP topology to which the IAB node sending the first data packet to the first IAB node belongs is the same as the BAP topology corresponding to the ingress link used by the first IAB node to receive the first data packet, step 801 may be replaced with the following: The first IAB node processes the first data packet based on the BAP topology to which the IAB node sending the first data packet belongs and the BAP topology to which the first IAB node belongs. The first IAB node knows the BAP topology to which the first IAB node belongs. In some embodiments, the first IAB node belongs to the first BAP topology, that is, the BAP topology to which the first IAB node belongs is the first BAP topology. In some embodiments, configuration information of the first IAB node indicates the BAP topology to which the first IAB node belongs. In these embodiments, the first IAB node may determine, based on the configuration information of the first IAB node, the BAP topology to which the first IAB node belongs.

An ingress link (ingress link) used by the first IAB node to receive a downlink data packet may include a first ingress link and a second ingress link, a BAP topology corresponding to the first ingress link is the first BAP topology, and a BAP topology corresponding to the second ingress link is the second BAP topology. It should be understood that, if the first IAB node receives the first data packet through the first ingress link, the BAP topology corresponding to the ingress link used by the first IAB node to receive the first data packet is the first BAP topology; or if the first IAB node receives the first data packet through the second ingress link, the BAP topology corresponding to the ingress link used by the first IAB node to receive the first data packet is the second BAP topology. In some embodiments, the first IAB node may store a first correspondence between the first ingress link and the first BAP topology and a second correspondence between the second ingress link and the second BAP topology. The first IAB node may determine, based on the first correspondence, that the first ingress link is corresponding to the first BAP topology, and the first IAB node may determine, based on the second correspondence, that the second ingress link is corresponding to the second BAP topology. In some embodiments, the first IAB node may store a correspondence between each ingress link and a BAP topology corresponding to the ingress link, and the first IAB node may determine, based on the correspondence, a BAP topology corresponding to any ingress link for receiving a downlink data packet.

In some embodiments, step 802 may be replaced with the following: The first IAB node processes the first data packet based on second indication information in the first data packet and the BAP topology to which the first IAB node belongs. The second indication information indicates that a destination BAP address of the first data packet is allocated by the first donor node. Alternatively, the second indication information indicates that a destination BAP address of the first data packet is allocated by the second donor node. The second indication information may be included in a header of the first data packet. For example, the second indication information may be additional indication information (occupying one or more bits) added to an existing BAP address. For example, the second indication information is two additional bits added to an existing BAP address. If the second indication information is 00, the second indication information indicates that the destination BAP address is allocated by the first donor node. If the second indication information is 11, the second indication information indicates that the destination BAP address is allocated by the second donor node. It should be understood that, if the second indication information indicates that the destination BAP address of the first data packet is allocated by the first donor node, it indicates that the BAP topology corresponding to the ingress link used by the first IAB node to receive the first data packet is the first BAP topology; or if the second indication information indicates that the destination BAP address of the first data packet is allocated by the second donor node, it indicates that the BAP topology corresponding to the ingress link used by the first IAB node to receive the first data packet is the second BAP topology.

The first IAB node may determine, based on the second indication information and the BAP topology to which the first IAB node belongs, whether to rewrite a BAP routing ID of the first data packet. For example, when the first IAB node belongs to the first BAP topology and the second indication information indicates that the destination BAP address of the first data packet is allocated by the second donor node, the first IAB node determines to rewrite the BAP routing ID of the first data packet. For another example, when the first IAB node belongs to the first BAP topology and the second indication information indicates that the destination BAP address of the first data packet is allocated by the first donor node, the first IAB node determines not to rewrite the BAP routing ID of the first data packet. From a perspective of a donor node, when forwarding a downlink data packet through the BAP topology controlled by a peer end, the first donor node and the second donor node indicate (for example, by using the second indication information) a specific donor node that allocates a BAP address of the downlink data packet. In this way, after receiving the downlink data packet, a boundary node (for example, the first IAB node) may directly determine whether an operation such as rewriting needs to be performed.

In some embodiments, step 802 may be replaced with the following: The first IAB node processes the first data packet based on third indication information in the first data packet, where the third indication information indicates to rewrite the destination BAP address of the first data packet, or the third indication information indicates not to rewrite the destination BAP address of the first data packet. That the third indication information indicates to rewrite the destination BAP address of the first data packet may be understood as that the third indication information indicates that the destination BAP address of the first data packet is a pseudo BAP address. That the third indication information indicates not to rewrite the destination BAP address of the first data packet may be understood as that the third indication information indicates that the destination BAP address of the first data packet is an actual BAP address (non-pseudo BAP address). The third indication information may occupy one or more bits in a header of the first data packet. For example, the third indication information may be additional indication information (occupying one or more bits) added to an existing BAP address. For example, the third indication information is two additional bits added to an existing BAP address. If the third indication information is 00, the third indication information indicates not to rewrite the destination BAP address of the first data packet. If the third indication information is 11, the third indication information indicates to rewrite the destination BAP address of the first data packet.

The first IAB node may determine, for a received downlink data packet (for example, the first data packet), whether to rewrite a BAP routing ID of the downlink data packet. It should be understood that, it is ensured that the first data packet is routed to a correct path only when the first IAB node can accurately determine whether to rewrite the BAP routing ID of the received first data packet.

In this embodiment of this application, the first IAB node can accurately determine, based on the BAP topology corresponding to the ingress link for receiving the first data packet and the BAP topology to which the first IAB node belongs, whether to rewrite the BAP routing ID of the received first data packet, to route the first data packet to the correct path.

The following describes some possible examples of step 802.

### Example 1

When the BAP topology corresponding to the ingress link used by the first IAB node to receive the first data packet is not the first BAP topology and a first condition is not met, the first IAB node forwards the first data packet based on a second BAP routing identifier and a routing table, where the first condition includes: a first BAP address matches a second BAP address, where the second BAP routing identifier is obtained by rewriting a first BAP routing identifier of the first data packet, and the first BAP routing identifier includes the destination BAP address and a path identifier of the first data packet; and
the first BAP address is obtained by rewriting the destination BAP address of the first data packet, and the second BAP address is a BAP address allocated by the first donor node to the first IAB node; or
the first BAP address is the destination BAP address of the first data packet, and the second BAP address is a BAP address allocated by the second donor node to the first IAB node.

That a first BAP address matches a second BAP address may be that the first BAP address is the same as the second BAP address, or may be that the first BAP address and the second BAP address meet a specific mapping relationship. This is not limited in this application. In this application, that two addresses (for example, two BAP addresses) match may mean that the two addresses are the same, or may mean that the two addresses meet a specific mapping relationship. This is not limited in this application.

In some embodiments, the first IAB node may rewrite (rewriting) the destination BAP address of the first data packet to obtain the first BAP address. The first BAP address is a BAP address that can be identified by an IAB node in the second BAP topology. In Example 1, before the first IAB node forwards the first data packet based on the second BAP routing identifier and the routing table, the first IAB node may perform the following operation: The first IAB node rewrites the first BAP routing identifier of the first data packet as the second BAP routing identifier. For example, the first IAB node searches a rewriting table (rewriting table) for the second BAP routing identifier corresponding to the first BAP routing identifier of the first data packet, and a BAP address included in the second BAP routing identifier is the first BAP address. That the first IAB node forwards the first data packet based on a second BAP routing identifier and a routing table may be that the first IAB node forwards the first data packet based on a next-hop BAP address that is in the routing table and that matches the second BAP routing identifier. If the routing table does not include the next-hop BAP address that matches the second BAP routing identifier, the first IAB node discards the first data packet.

The first condition may be understood as a condition for the first IAB node to determine, when the BAP topology corresponding to the ingress link used by the first IAB node to receive the first data packet is not the first BAP topology, whether to forward the first data packet. If the first condition is met, the first IAB node submits the first data packet to an upper layer of a BAP layer of the first IAB node. If the first condition is not met, the first IAB node forwards the first data packet. Whether the BAP topology corresponding to the ingress link used by the first IAB node to receive the first data packet is the first BAP topology may be understood as a condition of whether to rewrite the BAP routing identifier of the first data packet. If the BAP topology corresponding to the ingress link used by the first IAB node to receive the first data packet is the first BAP topology, the first IAB node does not need to rewrite the BAP routing identifier of the first data packet. If the BAP topology corresponding to the ingress link used by the first IAB node to receive the first data packet is not the first BAP topology, the first IAB node may rewrite the BAP routing identifier of the first data packet, and forward the first data packet by using a rewritten BAP routing identifier.

In a possible implementation, the first condition further includes: First indication information included in the first data packet indicates to submit the first data packet to an upper layer of a BAP layer of the first IAB node. In some embodiments, the first indication information may be included in the path identifier included in the first data packet. The first indication information may be additional indication information (occupying one or more bits) added to an existing path identifier. For example, the first indication information is two additional bits added to an existing path identifier. If the first indication information is 00, the first indication information indicates not to submit the first data packet to an upper layer. If the first indication information is 11, the first indication information indicates to submit the first data packet to an upper layer (that is, submit the first data packet to the upper layer). In this implementation, the first data packet can be prevented from being incorrectly submitted to the upper layer of the BAP layer of the first IAB node.

In this application, that the BAP topology corresponding to the ingress link used by the first IAB node to receive the first data packet is not the first BAP topology may be replaced with the following: the second indication information in the first data packet indicates that the destination BAP address of the first data packet is allocated by the second donor node, or the third indication information in the first data packet indicates to rewrite the destination BAP address of the first data packet.

In Example 1, when the BAP topology corresponding to the ingress link used by the first IAB node to receive the first data packet is not the first BAP topology and the first condition is not met, the first IAB node forwards the first data packet based on the second BAP routing identifier and the routing table, so that the first data packet can be routed to the correct path.

### Example 2

When the BAP topology corresponding to the ingress link used by the first IAB node to receive the first data packet is not the first BAP topology and the first condition is met, the first IAB node submits the first data packet to an upper layer of a BAP layer of the first IAB node, where the first condition includes: the first BAP address matches the second BAP address, where
the first BAP address is obtained by rewriting the destination BAP address of the first data packet, and the second BAP address is the BAP address allocated by the first donor node to the first IAB node; or
the first BAP address is the destination BAP address of the first data packet, and the second BAP address is the BAP address allocated by the second donor node to the first IAB node.

If the first BAP address is obtained by rewriting the destination BAP address of the first data packet, the first BAP address is a BAP address that can be identified by the first IAB node (corresponding to a BAP address allocated by the first donor node to the first IAB node). Whether the first data packet needs to be submitted to the upper layer of the BAP layer of the first IAB node may be accurately determined by determining whether the first BAP address matches the BAP address allocated by the first donor node to the first IAB node.

When the BAP topology corresponding to the ingress link used by the first IAB node to receive the first data packet is not the first BAP topology, the BAP address of the first data packet is allocated by the second donor node. Therefore, the first IAB node may accurately determine, by determining whether the destination BAP address of the first data packet matches the BAP address allocated by the second donor node to the first IAB node, whether the first data packet needs to be submitted to the upper layer of the BAP layer of the first IAB node.

In Example 2, when the BAP topology corresponding to the ingress link used by the first IAB node to receive the first data packet is not the first BAP topology and the first condition is met, the first IAB node submits the first data packet to the upper layer of the BAP layer of the first IAB node, so that the first data packet can be routed to the correct path.

### Example 3

When the BAP topology corresponding to the ingress link used by the first IAB node to receive the first data packet is the first BAP topology and a third BAP address does not match a fourth BAP address, the first IAB node forwards the first data packet based on the routing table, where the third BAP address is a destination BAP address of the first data packet, and the fourth BAP address is a BAP address allocated by the first donor node to the first IAB node.

When the BAP topology corresponding to the ingress link used by the first IAB node to receive the first data packet is the first BAP topology, the BAP address of the first data packet is allocated by the first donor node. The first IAB node may accurately determine, by determining whether the third BAP address matches the fourth BAP address, whether the first data packet needs to be submitted to the upper layer of the BAP layer of the first IAB node.

In this application, that the BAP topology corresponding to the ingress link used by the first IAB node to receive the first data packet is the first BAP topology may be replaced with the following: the second indication information in the first data packet indicates that the destination BAP address of the first data packet is allocated by the first donor node, or the third indication information in the first data packet indicates not to rewrite the destination BAP address of the first data packet.

### Example 4

When the BAP topology corresponding to the ingress link used by the first IAB node to receive the first data packet is the first BAP topology and a third BAP address matches a fourth BAP address, the first IAB node submits the first data packet to an upper layer of a BAP layer of the first IAB node, where the third BAP address is a destination BAP address of the first data packet, and the fourth BAP address is a BAP address allocated by the first donor node to the first IAB node.

When the BAP topology corresponding to the ingress link used by the first IAB node to receive the first data packet is the first BAP topology, the BAP address of the first data packet is allocated by the first donor node. The first IAB node may accurately determine, by determining whether the third BAP address matches the fourth BAP address, whether the first data packet needs to be submitted to the upper layer of the BAP layer of the first IAB node.

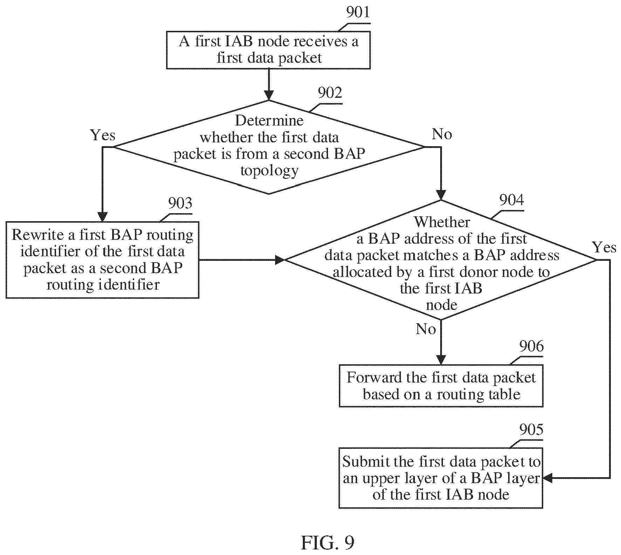

The foregoing describes some possible examples of step 802. The following describes some possible implementations of the method procedure in FIG. 8 with reference to the accompanying drawings. FIG. 9 is a flowchart of another routing method according to an embodiment of this application. The method procedure in FIG. 9 is a possible implementation of the method procedure in FIG. 8. As shown in FIG. 9, the method includes the following steps.

901: A first IAB node receives a first data packet.

902: The first IAB node determines whether the first data packet is from a second BAP topology.

If the first data packet is from the second BAP topology, step 903 is performed. If the first data packet is not from the second BAP topology, step 904 is performed. If the first data packet is from an IAB node belonging to the second BAP topology, the first IAB node determines that the first data packet is from the second BAP topology. If the first data packet is not from an IAB node belonging to the second BAP topology, the first IAB node determines that the first data packet is not from the second BAP topology.

Step 902 may be replaced with the following: The first IAB node determines whether the first data packet is from a first BAP topology. If the first data packet is from the first BAP topology, step 904 is performed. If the first data packet is not from the first BAP topology, step 903 is performed.

Step 902 may be replaced with the following: Determine whether the first data packet is from a secondary cell group (secondary cell group, SCG). If the first data packet is from the secondary cell group, step 903 is performed. If the first data packet is not from the secondary cell group, step 904 is performed. Alternatively, step 902 may be replaced with the following: Determine whether the first data packet is from a master cell group (master cell group, MCG). If the first data packet is from the master cell group, step 904 is performed. If the first data packet is not from the master cell group, step 903 is performed. The first IAB node belongs to the MCG.

Step 902 may be replaced with the following: Determine whether the first data packet is from the SCG. If the first data packet is from the SCG, step 904 is performed. If the first data packet is not from the SCG, step 903 is performed. Alternatively, step 902 may be replaced with the following: Determine whether the first data packet is from the MCG. If the first data packet is from the MCG, step 903 is performed. If the first data packet is not from the MCG, step 904 is performed. The first IAB node belongs to the SCG.

In some embodiments, step 902 may be replaced with the following: Determine whether a topology ID corresponding to an ingress link for receiving the first data packet indicates the second BAP topology. If the topology ID corresponding to the ingress link for receiving the first data packet indicates the second BAP topology, step 903 is performed. If the topology ID corresponding to the ingress link for receiving the first data packet does not indicate the second BAP topology, step 904 is performed. In some embodiments, a first donor node may configure a mapping relationship between a link ID of an ingress link and a topology ID for the first IAB node in advance. Specifically, the first donor node may send an RRC message to an MT side of the first IAB node, and use a new information element CellGroupConfig in the message to carry the mapping relationship. Alternatively, the first donor node may send an F1AP message to a DU side of the first IAB node, and the F1AP message may carry the mapping relationship. The topology ID may be represented by 0 or 1. For example, it is specified that a topology with ID=0 is the first BAP topology, and another topology is the second BAP topology.

In some embodiments, step 902 may be replaced with the following: Determine whether a BAP routing ID in a header of the first data packet matches a routing table of the first BAP topology. If the BAP routing ID in the header of the first data packet matches the routing table of the first BAP topology, step 904 is performed. If the BAP routing ID in the header of the first data packet does not match the routing table of the first BAP topology, step 903 is performed.

In some embodiments, step 902 may be replaced with the following: Determine whether a BAP address in a header of the first data packet belongs to a first BAP address set. If the BAP address in the header of the first data packet belongs to the first BAP address set, step 903 is performed. If the BAP address in the header of the first data packet does not belong to the first BAP address set, step 904 is performed. In some embodiments, a second donor node may configure the first BAP address set for the first IAB node in advance via the first donor node. For example, the first BAP address set may be or needs to include a set including pseudo BAP addresses allocated by the second donor node to the first IAB node and a descendant node of the first IAB node. All BAP addresses in the first BAP address set may be configured in advance in an original BAP routing identifier column of a rewriting table in step 903.

In some embodiments, step 902 may be replaced with the following: Determine whether a BAP path ID in a header of the first data packet belongs to a first BAP path ID set. If the BAP path ID in the header of the first data packet belongs to the first BAP path ID set, step 903 is performed. If the BAP path ID in the header of the first data packet does not belong to the first BAP path ID set, step 904 is performed. In some embodiments, the second donor node may configure the first BAP path ID set for the first IAB node in advance via the first donor node. For example, the first BAP path ID set may be or needs to include a set including special path IDs that are allocated by the second donor node and that indicate special paths to the first IAB node and the descendant node of the first IAB node. All BAP path IDs in the first BAP path ID set may be configured in advance in an original BAP routing identifier column of a rewriting table in step 903.

In some embodiments, that the first IAB node determines whether the first data packet is from a second BAP topology is replaced with the following: The first IAB node determines whether a BAP topology corresponding to the ingress link for receiving the first data packet is the second BAP topology. If the BAP topology corresponding to the ingress link for receiving the first data packet is the second BAP topology, step 903 is performed. If the BAP topology corresponding to the ingress link for receiving the first data packet is not the second BAP topology, step 904 is performed. In some embodiments, an ingress link used by the first IAB node to receive a downlink data packet may include a first ingress link and a second ingress link, a BAP topology corresponding to the first ingress link is the first BAP topology, and a BAP topology corresponding to the second ingress link is the second BAP topology. It should be understood that, if the first IAB node receives the first data packet through the first ingress link, the BAP topology corresponding to the ingress link used by the first IAB node to receive the first data packet is the first BAP topology; or if the first IAB node receives the first data packet through the second ingress link, the BAP topology corresponding to the ingress link used by the first IAB node to receive the first data packet is the second BAP topology.

903: The first IAB node rewrites a first BAP routing identifier of the first data packet as a second BAP routing identifier.

The first BAP routing identifier may be understood as an original BAP routing identifier of the first data packet or a current BAP routing identifier (BAP routing ID) of the first data packet. The first BAP routing identifier may include a destination BAP address and a path identifier (path ID) of the first data packet.

A possible implementation of step 903 is as follows: Check whether the first BAP routing identifier of the first data packet matches the rewriting table (rewriting table), that is, determine whether the first BAP routing identifier may be rewritten; and if the first BAP routing identifier matches the rewriting table, rewrite the first BAP routing identifier as the second BAP routing identifier based on the rewriting table; or if the first BAP routing identifier does not match the rewriting table, submit the first data packet to an upper layer of a BAP layer of the first IAB node. The rewriting table may include one or more groups of BAP routing identifier mapping relationships. Each group of BAP routing identifier mapping relationships is used to map a BAP routing identifier (that is, a BAP routing identifier that can be identified by an IAB node in the second BAP topology) that cannot be identified by the first IAB node to a BAP routing identifier that can be identified by the first IAB node. Checking whether the first BAP routing identifier of the first data packet matches the rewriting table may be: querying whether the rewriting table includes a mapping relationship between the first BAP routing identifier and another BAP routing identifier. Rewriting the first BAP routing identifier as the second BAP routing identifier based on the rewriting table may be: obtaining, based on the rewriting table, the second BAP routing identifier that has a BAP routing identifier mapping relationship with the first BAP routing identifier.

Table 1 is an example of the rewriting table provided in this application. Refer to Table 1. A first column is an original BAP routing identifier, and a second column is a rewritten BAP routing identifier. It should be understood that each original BAP routing identifier in the first column is a BAP routing identifier that can be identified by the IAB node in the second BAP topology. In other words, each original BAP routing identifier in the first column corresponds to a BAP routing identifier of a downlink data packet (for example, the first data packet) that belongs to the second BAP topology. The rewritten BAP routing identifier in the second column is a BAP routing identifier that can be identified by the first IAB node. In Table 1, an original BAP routing identifier in each row corresponds to a rewritten BAP routing identifier in the row. For example, a first BAP routing identifier in a first row corresponds to a second BAP routing identifier in the first row. For example, the first IAB node may query whether the first column in Table 1 includes the first BAP routing identifier. If the first column in Table 1 includes the first BAP routing identifier, the first BAP routing identifier matches the rewriting table. If the first column in Table 1 does not include the first BAP routing identifier, the first BAP routing identifier does not match the rewriting table. In this example, if the first column in Table 1 includes the first BAP routing identifier, the second BAP routing identifier that has a mapping relationship with the first BAP routing identifier is obtained.

**Table 1**

| Original BAP routing identifier | Rewritten BAP routing identifier |
|---|---|
| First BAP routing identifier | Second BAP routing identifier |
| Third BAP routing identifier | Fourth BAP routing identifier |
| ... | ... |
| N^{th} BAP routing identifier | (N+1)^{th} BAP routing identifier |

A possible implementation of step 903 is as follows: The first IAB node directly rewrites the first BAP routing identifier based on the rewriting table, to obtain the second BAP routing identifier. In this implementation, the first BAP routing identifier may be quickly rewritten as the second BAP routing identifier, which requires a few operations.

904: Determine whether the BAP address of the first data packet matches a BAP address allocated by the first donor node to the first IAB node.

If the BAP address of the first data packet matches the BAP address allocated by the first donor node to the first IAB node, step 905 is performed. If the BAP address of the first data packet does not match the BAP address allocated by the first donor node to the first IAB node, step 906 is performed. The first IAB node may store the BAP address allocated by the first donor node to the first IAB node. Determining whether the BAP address of the first data packet matches the BAP address allocated by the first donor node to the first IAB node may be: determining whether the BAP address of the first data packet is the same as the BAP address allocated by the first donor node to the first IAB node.

When the first data packet is not from the second BAP topology, step 904 may be as follows: Determine whether the destination BAP address of the first data packet matches the BAP address allocated by the first donor node to the first IAB node.

When the first data packet is from the second BAP topology, step 904 may be as follows: Determine whether a rewritten BAP address of the first data packet matches the BAP address allocated by the first donor node to the first IAB node, where the rewritten BAP address is a BAP address included in the second BAP routing identifier.

905: The first IAB node submits the first data packet to the upper layer of the BAP layer of the first IAB node.

906: The first IAB node forwards the first data packet based on the routing table.

When the first data packet is not from the second BAP topology, step 906 may be as follows: The first IAB node forwards the first data packet based on a next-hop BAP address that is in the routing table and that matches the first BAP routing identifier. If no next-hop BAP address (entry) that matches the first BAP routing identifier is found in the routing table, the first IAB node determines that the first data packet is an error packet, and discards the first data packet.

When the first data packet is from the second BAP topology, step 906 may be as follows: The first IAB node forwards the first data packet based on a next-hop BAP address that is in the routing table and that matches the second BAP routing identifier. If no next-hop BAP address (entry) that matches the second BAP routing identifier is found in the routing table, the first IAB node determines that the first data packet is an error packet, and discards the first data packet.

In some embodiments, the BAP layer of the first IAB node may route the first data packet based on the BAP address of the first data packet, or may rewrite the BAP routing ID of the first data packet and then route the first data packet. Based on the two solutions, priorities of the two solutions may be set. A possible example is as follows: If the rewriting table is configured for the first IAB node, the BAP layer of the first IAB node considers that a priority of the latter solution is higher than a priority of the former solution. If the rewriting table is not configured for the first IAB node, rerouting is performed based only on the BAP address.

In this embodiment of this application, whether the first data packet is from the second BAP topology is determined, to determine whether to rewrite the BAP routing identifier of the first data packet, so that the data packet from the second BAP topology is forwarded through the routing table. Whether the BAP address of the first data packet matches the BAP address allocated by the first donor node to the first IAB node is determined, to determine whether to forward the first data packet or submit the first data packet to the upper layer of the BAP layer. In this way, the first data packet can be routed to a correct transmission path, to ensure stable transmission of data between an IAB node and a UE.

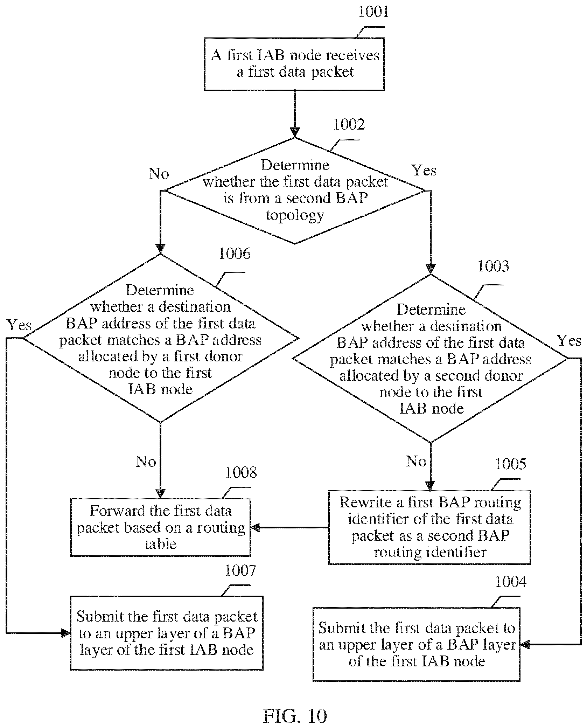

FIG. 10 is a flowchart of another routing method according to an embodiment of this application. The method procedure in FIG. 10 is a possible implementation of the method procedure in FIG. 8. As shown in FIG. 10, the method includes the following steps.

1001: A first IAB node receives a first data packet.

1002: The first IAB node determines whether the first data packet is from a second BAP topology.

If the first data packet is from the second BAP topology, step 1003 is performed. If the first data packet is not from the second BAP topology, step 1004 is performed. For an implementation of step 1002, refer to step 902.

1003: Determine whether a destination BAP address of the first data packet matches a BAP address allocated by a second donor node to the first IAB node.

Step 1003 may be as follows: Determine whether the destination BAP address of the first data packet is the same as the BAP address allocated by the second donor node to the first IAB node. If the destination BAP address of the first data packet is the same as the BAP address allocated by the second donor node to the first IAB node, step 1004 is performed. If the destination BAP address of the first data packet is not the same as the BAP address allocated by the second donor node to the first IAB node, step 1005 is performed.

In some embodiments, step 1003 may be replaced with the following: Determine whether the destination BAP address of the first data packet belongs to a second BAP address set. If the destination BAP address of the first data packet belongs to the second BAP address set, step 1005 is performed. If the destination BAP address of the first data packet does not belong to the second BAP address set, step 1004 is performed. In some embodiments, the second donor node may pre-configure the second BAP address set for the first IAB node via the first donor node. Optionally, the second BAP address set may be a set including pseudo BAP addresses allocated by the second donor node to descendant nodes of the first IAB node, but does not include an address allocated to the first IAB node. Optionally, all BAP addresses in the second BAP address set may be configured in advance in an original BAP routing identifier column of a rewriting table in step 1005.

In some embodiments, step 1003 may be replaced with the following: Determine whether a destination BAP path ID of the first data packet belongs to a second BAP path ID set. If the destination BAP path ID of the first data packet belongs to the second BAP path ID set, step 1005 is performed. If the destination BAP path ID of the first data packet does not belong to the second BAP path ID set, step 1004 is performed. In some embodiments, the second donor node may pre-configure the second BAP path ID set for the first IAB node via the first donor node. Optionally, the second BAP path ID set may be a set including special path IDs that are allocated by the second donor node and that indicate special paths to descendant nodes of the first IAB node, but does not include a path ID indicating a path to the first IAB node. Optionally, all BAP path IDs in the second BAP path ID set may be configured in advance in an original BAP routing identifier column of a rewriting table in step 1005.

1004: The first IAB node submits the first data packet to an upper layer of a BAP layer of the first IAB node.

1005: The first IAB node rewrites a first BAP routing identifier of the first data packet as a second BAP routing identifier.

For an implementation of step 1005, refer to step 903 in FIG. 9.

1006: Determine whether the destination BAP address of the first data packet matches a BAP address allocated by the first donor node to the first IAB node.

Step 1006 may be as follows: Determine whether the destination BAP address of the first data packet is the same as the BAP address allocated by the first donor node to the first IAB node. If the destination BAP address of the first data packet is the same as the BAP address allocated by the first donor node to the first IAB node, step 1007 is performed. If the destination BAP address of the first data packet is not the same as the BAP address allocated by the first donor node to the first IAB node, step 1008 is performed.

1007: The first IAB node submits the first data packet to the upper layer of the BAP layer of the first IAB node.

1008: The first IAB node forwards the first data packet based on a routing table.

For an implementation of step 1008, refer to step 906 in FIG. 9.

In this embodiment of this application, whether the first data packet is from the second BAP topology is determined, to determine whether to rewrite the BAP routing identifier of the first data packet, so that the data packet from the second BAP topology is forwarded through the routing table. When the first data packet is from the second BAP topology, whether the destination BAP address of the first data packet matches the BAP address allocated by the second donor node to the first IAB node is determined, to determine whether to forward the first data packet or submit the first data packet to the upper layer of the BAP layer. When the first data packet is not from the second BAP topology, whether the destination BAP address of the first data packet matches the BAP address allocated by the first donor node to the first IAB node is determined, to determine whether to forward the first data packet or submit the first data packet to the upper layer of the BAP layer. In this way, the first data packet can be routed to a correct transmission path, to ensure stable transmission of data between an IAB node and a UE.

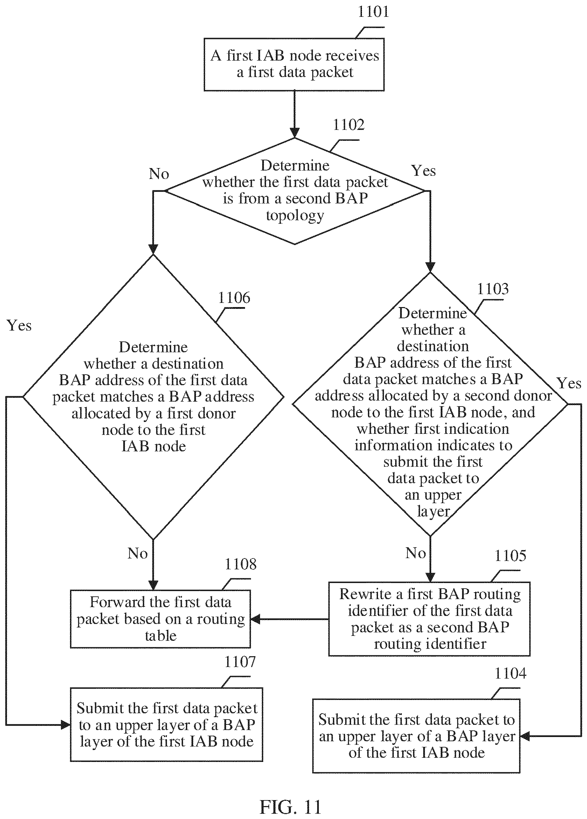

FIG. 11 is a flowchart of another routing method according to an embodiment of this application. The method procedure in FIG. 11 is a possible implementation of the method procedure in FIG. 8. As shown in FIG. 11, the method includes the following steps.

1101: A first IAB node receives a first data packet.

1102: The first IAB node determines whether the first data packet is from a second BAP topology.

If the first data packet is from the second BAP topology, step 1103 is performed. If the first data packet is not from the second BAP topology, step 1104 is performed. For an implementation of step 1102, refer to step 902 or a step that may replace step 902.

1103: Determine whether a destination BAP address of the first data packet matches a BAP address allocated by a second donor node to the first IAB node, and whether the first indication information indicates to submit the first data packet to an upper layer.

Step 1103 may be as follows: Determine whether the destination BAP address of the first data packet is the same as the BAP address allocated by the second donor node to the first IAB node, and whether the first indication information indicates to submit the first data packet to the upper layer. If the destination BAP address of the first data packet is the same as the BAP address allocated by the second donor node to the first IAB node, and the first indication information indicates to submit the first data packet to the upper layer, step 1104 is performed. If the destination BAP address of the first data packet is not the same as the BAP address allocated by the second donor node to the first IAB node, and the first indication information indicates not to submit the first data packet to the upper layer, step 1105 is performed. The first indication information is included in the first data packet. The first indication information may indicate to submit the first data packet to an upper layer of a BAP layer of the first IAB node or not to submit the first data packet to an upper layer of a BAP layer of the first IAB node. In some embodiments, the first indication information may be included in a path identifier included in the first data packet. The first indication information may be additional indication information (occupying one or more bits) added to an existing path identifier. For example, the first indication information is two additional bits added to an existing path identifier. If the first indication information is 00, the first indication information indicates not to submit the first data packet to an upper layer. If the first indication information is 11, the first indication information indicates to submit the first data packet to an upper layer (that is, submit the first data packet to the upper layer). In some embodiments, one or more special path ID values (10 bits in size) may be used for the first indication information to indicate whether to submit the first data packet to the upper layer. For example, if the path ID is equal to 31, the first data packet is sent to the upper layer. If the path ID is not equal to 31, the first data packet is not sent to the upper layer. In this application, an upper layer of a BAP layer of an IAB node may be an IP layer on a DU side. After receiving a data packet, a BAP layer on an MT side of the IAB node determines that the data packet is given for the IAB node, and then sends the data packet to the IP layer on the DU side of the IAB node.

1104: The first IAB node submits the first data packet to the upper layer of the BAP layer of the first IAB node.

1105: The first IAB node rewrites a first BAP routing identifier of the first data packet as a second BAP routing identifier.

For an implementation of step 1105, refer to step 903 in FIG. 9.

1106: Determine whether the destination BAP address of the first data packet matches a BAP address allocated by the first donor node to the first IAB node.

Step 1106 may be as follows: Determine whether the destination BAP address of the first data packet is the same as the BAP address allocated by the first donor node to the first IAB node. If the destination BAP address of the first data packet is the same as the BAP address allocated by the first donor node to the first IAB node, step 1107 is performed. If the destination BAP address of the first data packet is not the same as the BAP address allocated by the first donor node to the first IAB node, step 1108 is performed.

1107: The first IAB node submits the first data packet to the upper layer of the BAP layer of the first IAB node.

1108: The first IAB node forwards the first data packet based on a routing table.

For an implementation of step 1108, refer to step 906 in FIG. 9.

In this embodiment of this application, whether the first data packet is from the second BAP topology is determined, to determine whether to rewrite the BAP routing identifier of the first data packet, so that the data packet from the second BAP topology is forwarded through the routing table. When the first data packet is from the second BAP topology, whether the destination BAP address of the first data packet matches the BAP address allocated by the second donor node to the first IAB node and whether the first indication information indicates to submit the first data packet to the upper layer are determined, to determine whether to forward the first data packet or submit the first data packet to the upper layer of the BAP layer. When the first data packet is not from the second BAP topology, whether the destination BAP address of the first data packet matches the BAP address allocated by the first donor node to the first IAB node is determined, to determine whether to forward the first data packet or submit the first data packet to the upper layer of the BAP layer. In this way, the first data packet is routed to a correct transmission path, to ensure stable transmission of data between an IAB node and a UE.

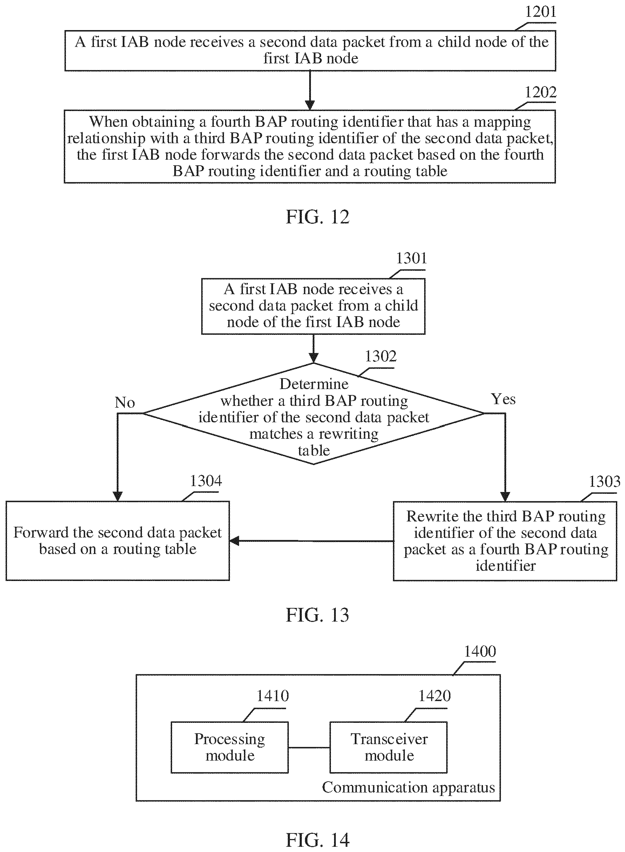

The foregoing describes a solution of routing a downlink data packet to a correct transmission path. With reference to the accompanying drawings, the following describes a solution of routing an uplink data packet to a correct transmission path. FIG. 12 is a flowchart of another routing method according to an embodiment of this application. The method in FIG. 12 may be applied to an IAB network, the IAB network includes a first BAP topology and a second BAP topology, the first BAP topology is managed by a first donor node, the second BAP topology is managed by a second donor node, and the first donor node is different from the second donor node. Any boundary node in the IAB network may forward an uplink data packet by using the method procedure in FIG. 12. In some embodiments, the boundary node in the IAB network may perform the routing methods in FIG. 8 to FIG. 11 to forward a downlink data packet, or may perform the routing method in FIG. 12 to forward an uplink data packet. As shown in FIG. 12, the method includes the following steps.

1201: A first IAB node receives a second data packet from a child node of the first IAB node.

The first IAB node is managed by the first donor node, at least one parent node of the first IAB node is managed by the second donor node, and the first IAB node belongs to the first BAP topology. The first IAB node is a boundary node in the IAB network.

1202: When obtaining a fourth BAP routing identifier that has a mapping relationship with a third BAP routing identifier of the second data packet, the first IAB node forwards the second data packet based on the fourth BAP routing identifier and a routing table.

In some embodiments, the first IAB node obtains, by searching a rewriting table, the fourth BAP routing identifier that has the mapping relationship with the third BAP routing identifier of the second data packet. For example, the first IAB node searches the rewriting table for a BAP routing identifier that has a mapping relationship with the third BAP routing identifier, to obtain the fourth BAP routing identifier. Forwarding the second data packet based on the fourth BAP routing identifier and the routing table may be as follows: The first IAB node forwards the second data packet based on a next-hop BAP address that is in the routing table and that matches the fourth BAP routing identifier.

Step 1202 may be replaced with the following: When the first IAB node does not obtain a BAP routing identifier that has a mapping relationship with the third BAP routing identifier of the second data packet, the first IAB node forwards the second data packet based on the third BAP routing identifier and the routing table. In some embodiments, the first IAB node obtains, by searching the rewriting table, the BAP routing identifier that has the mapping relationship with the third BAP routing identifier of the second data packet; and if the rewriting table does not include the BAP routing identifier that has the mapping relationship with the third BAP routing identifier, forwards the second data packet based on the third BAP routing identifier and the routing table. Forwarding the second data packet based on the third BAP routing identifier and the routing table may be as follows: The first IAB node forwards the second data packet based on a next-hop BAP address that is in the routing table and that matches the third BAP routing identifier.

In this embodiment of this application, when the fourth BAP routing identifier that has the mapping relationship with the third BAP routing identifier of the second data packet is obtained, the second data packet is forwarded based on the fourth BAP routing identifier and the routing table, so that the second data packet can be routed to a correct transmission path.

FIG. 13 is a flowchart of another routing method according to an embodiment of this application. The method procedure in FIG. 13 is a possible implementation of the method procedure in FIG. 12. As shown in FIG. 13, the method includes the following steps.

1301: A first IAB node receives a second data packet from a child node of the first IAB node.

1302: Determine whether a third BAP routing identifier of the second data packet matches a rewriting table.

Determining whether the third BAP routing identifier of the second data packet matches the rewriting table may be: determining whether the rewriting table includes a BAP routing identifier that has a mapping relationship with the third BAP routing identifier of the second data packet. If the rewriting table includes the BAP routing identifier that has the mapping relationship with the third BAP routing identifier of the second data packet, step 1303 is performed. If the rewriting table does not include the BAP routing identifier that has the mapping relationship with the third BAP routing identifier of the second data packet, step 1304 is performed. A first BAP routing identifier includes a destination BAP address and a path identifier of the second data packet.

In some embodiments, step 1302 may be replaced with the following: Determine whether the third BAP routing identifier of the second data packet matches a routing table of a first BAP topology. If the third BAP routing identifier of the second data packet matches the routing table of the first BAP topology, step 1304 is performed. If the third BAP routing identifier of the second data packet does not match the routing table of the first BAP topology, step 1303 is performed.

In some embodiments, step 1302 may be replaced with the following: Determine whether a third BAP address of the second data packet belongs to a third BAP address set. If the third BAP address of the second data packet belongs to the third BAP address set, step 1303 is performed. If the third BAP address of the second data packet does not belong to the third BAP address set, step 1304 is performed. In some embodiments, a first donor node may configure the third BAP address set for the first IAB node in advance. Optionally, the third BAP address set may or needs to include a BAP address allocated by the first donor node to the first IAB node or a pseudo BAP address allocated by the first donor node to a second donor node. Optionally, all BAP addresses in the third BAP address set may be configured in advance in an original BAP routing identifier column of the rewriting table in step 1303.

In some embodiments, step 1302 may be replaced with the following: Determine whether a third BAP path ID of the second data packet belongs to a third BAP path ID set. If the third BAP path ID of the second data packet belongs to the third BAP path ID set, step 1303 is performed. If the third BAP path ID of the second data packet does not belong to the third BAP path ID set, step 1304 is performed. In some embodiments, the first donor node may configure the third BAP path ID set for the first IAB node in advance. Optionally, the third BAP path ID set may or needs to include a BAP path ID that is allocated by the first donor node and that indicates a BAP path to the second donor node. Optionally, all path IDs in the third BAP path ID set may be configured in advance in an original BAP routing identifier column of the rewriting table in step 1303.

1303: The first IAB node rewrites the third BAP routing identifier of the second data packet as a fourth BAP routing identifier.

For an implementation of step 1303, refer to step 903.

1304: The first IAB node forwards the second data packet based on the routing table.

When the third BAP routing identifier matches the rewriting table, step 1304 may be as follows: The first IAB node forwards the second data packet based on a next-hop BAP address that is in the routing table and that matches the fourth BAP routing identifier. If no next-hop BAP address (entry) that matches the fourth BAP routing identifier is found in the routing table, the first IAB node determines that the second data packet is an error packet, and discards the second data packet.

When the third BAP routing identifier does not match the rewriting table, step 1304 may be as follows: The first IAB node forwards the second data packet based on a next-hop BAP address that is in the routing table and that matches the third BAP routing identifier. If no next-hop BAP address (entry) that matches the third BAP routing identifier is found in the routing table, the first IAB node determines that the second data packet is an error packet, and discards the second data packet.

In this embodiment of this application, whether to rewrite the BAP routing identifier of the second data packet is determined by determining whether the third BAP routing identifier of the second data packet matches the rewriting table, so that the second data packet is forwarded based on the BAP routing identifier of the second data packet, and the second data packet can be routed to a correct transmission path.

FIG. 14 is a schematic diagram of a structure of a communication apparatus 1400. The communication apparatus 1400 may correspondingly implement functions or steps implemented by an IAB node (for example, a first IAB node) in the foregoing method embodiments. The communication apparatus may include a processing module 1410 and a transceiver module 1420. Optionally, a storage unit may be further included. The storage unit may be configured to store instructions (code or a program) and/or data. The processing module 1410 and the transceiver module 1420 may be coupled to the storage unit. For example, the processing module 1410 may read the instructions (the code or the program) and/or the data in the storage unit, to implement a corresponding method. The foregoing units may be independently disposed, or may be partially or all integrated. For example, the transceiver module 1420 may include a sending module and a receiving module.

In some possible implementations, the communication apparatus 1400 can correspondingly implement behaviors and functions of the first IAB node in the foregoing method embodiments. For example, the communication apparatus 1400 may be the first IAB node, or may be a component (for example, a chip or a circuit) used for the first IAB node. The transceiver module 1420 may be configured to perform all receiving or sending operations performed by the first IAB node in the embodiment shown in FIG. 8, FIG. 9, FIG. 10, FIG. 11, FIG. 12, or FIG. 13, for example, step 901 in the embodiment shown in FIG. 8 and step 901 and step 906 in the embodiment shown in FIG. 9, and/or another process used to support the technology described in this specification. The processing module 1410 is configured to perform all operations performed by the first IAB node in the embodiment shown in FIG. 8, FIG. 9, FIG. 10, FIG. 11, FIG. 12, or FIG. 13 except sending and receiving operations. For example, the transceiver module 1420 may be configured to perform step 802 in the embodiment shown in FIG. 8 and/or another process used to support the technology described in this specification. For another example, the transceiver module 1420 may be configured to perform step 902, step 903, step 904, and step 905 in the embodiment shown in FIG. 9. For another example, the transceiver module 1420 may be configured to perform step 1002 to step 1007 in the embodiment shown in FIG. 10. For another example, the transceiver module 1420 may be configured to perform step 1102 to step 1107 in the embodiment shown in FIG. 11. For another example, the transceiver module 1420 may be configured to perform step 1201 and step 1202 in the embodiment shown in FIG. 12. For another example, the transceiver module 1420 may be configured to perform step 1301 and step 1304 in the embodiment shown in FIG. 13. For related specific descriptions, refer to the method embodiments.

In some possible implementations, the communication apparatus 1400 can correspondingly implement behavior and functions of a first donor node in the foregoing method embodiments. For example, the communication apparatus 1400 may be the first donor node, or may be a component (for example, a chip or a circuit) used for the first donor node. The transceiver module 1420 may be configured to perform all receiving or sending operations performed by the first donor node in the foregoing embodiments, and the processing module 1410 may be configured to perform all operations performed by the first donor node in the foregoing embodiments except sending and receiving operations. For related specific descriptions, refer to the method embodiments.

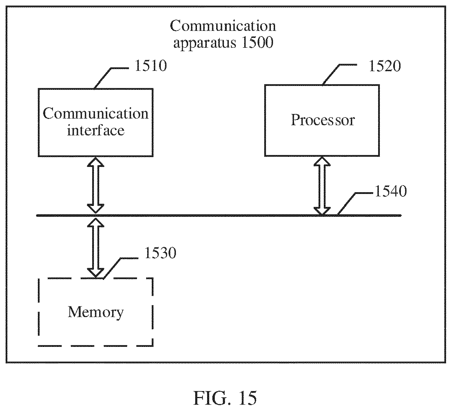

FIG. 15 is a schematic diagram of a structure of a communication apparatus 1500 according to an embodiment of this application. The communication apparatus 1500 may be a first IAB node, and can implement functions of the first IAB node in the methods provided in embodiments of this application. Alternatively, the communication apparatus 1500 may be an apparatus that can support the first IAB node in implementing a corresponding function in the methods provided in embodiments of this application. The communication apparatus 1500 may be a chip system. In this embodiment of this application, the chip system may include a chip, or may include a chip and another discrete component.

In terms of hardware implementation, the transceiver module 1420 may be a transceiver, and the transceiver is integrated into the communication apparatus 1500 to form a communication interface 1510.

The communication apparatus 1500 includes at least one processor 1520, configured to implement or support the communication apparatus 1500 in implementing the functions of the first IAB node in the methods provided in embodiments of this application. For details, refer to the detailed descriptions in the method examples. Details are not described herein again.

The communication apparatus 1500 may further include at least one memory 1530, configured to store program instructions and/or data. The memory 1530 is coupled to the processor 1520. The coupling in this embodiment of this application may be an indirect coupling or a communication connection between apparatuses, units, or modules in an electrical form, a mechanical form, or another form, and is used for information exchange between the apparatuses, the units, or the modules. The processor 1520 may cooperate with the memory 1530. The processor 1520 may execute the program instructions and/or the data stored in the memory 1530, so that the communication apparatus 1500 implements a corresponding method. At least one of the at least one memory may be included in the processor.

The communication apparatus 1500 may further include the communication interface 1510, configured to communicate with another device through a transmission medium, so that an apparatus in the communication apparatus 1500 can communicate with the another device. For example, when the communication apparatus is the first IAB node, the another device is another IAB node. The processor 1520 may send and receive data through the communication interface 1510. The communication interface 1510 may be specifically a transceiver.

A specific connection medium between the communication interface 1510, the processor 1520, and the memory 1530 is not limited in this embodiment of this application. In this embodiment of this application, the memory 1530, the processor 1520, and the communication interface 1510 are connected through a bus 1540 in FIG. 15. The bus is represented by using a thick line in FIG. 15. A manner of a connection between other components is merely an example for description, and is not limited thereto. The bus may be classified into an address bus, a data bus, a control bus, and the like. For ease of representation, only one thick line is used to represent the bus in FIG. 15, but this does not mean that there is only one bus or only one type of bus.

In this embodiment of this application, the processor 1520 may be a general-purpose processor, a digital signal processor, an application-specific integrated circuit, a field programmable gate array or another programmable logic device, a discrete gate or a transistor logic device, or a discrete hardware component, so that the methods, steps, and logical block diagrams that are disclosed in embodiments of this application may be implemented or performed. The general-purpose processor may be a microprocessor, any conventional processor, or the like. The steps of the method disclosed with reference to embodiments of this application may be directly performed by a hardware processor, or may be performed by using a combination of hardware in the processor and a software module.

In this embodiment of this application, the memory 1530 may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of an instruction structure or a data structure and that can be accessed by a computer, but is not limited thereto. The memory in this embodiment of this application may alternatively be a circuit or any other apparatus that can implement a storage function, and is configured to store program instructions and/or data.

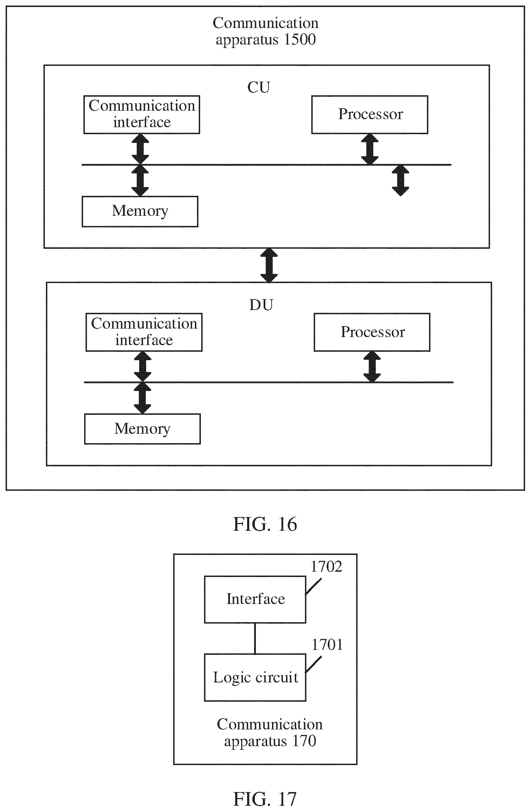

It should be understood that when the communication apparatus 1500 is the first IAB node, FIG. 16 shows another form of the communication apparatus 1500. In FIG. 16, the communication apparatus 1500 is a first IAB node. It should be understood that the first IAB node includes a CU and a DU. The CU may include a communication interface, a processor, a memory, and a bus connecting the communication interface, the processor, and the memory. The communication interface may be configured to communicate with a CU of an IAB donor node or a DU of an IAB node. The DU may also include a communication interface, a processor, a memory, and a bus connecting the communication interface, the processor, and the memory, where the communication interface is configured to communicate with an MT of the IAB node.

FIG. 17 is a schematic diagram of a structure of another communication apparatus 170 according to an embodiment of this application. As shown in FIG. 17, the communication apparatus shown in FIG. 17 includes a logic circuit 1701 and an interface 1702. The processing module in FIG. 14 may be implemented by the logic circuit 1701, and the transceiver module in FIG. 14 may be implemented by the interface 1702. The logic circuit 1701 may be a chip, a processing circuit, an integrated circuit, a system on chip (system on chip, SoC) chip, or the like, and the interface 1702 may be a communication interface, an input/output interface, or the like. In this embodiment of this application, the logic circuit may further be coupled to the interface. A specific connection manner of the logical circuit and the interface is not limited in this embodiment of this application.

In some embodiments of this application, the logic circuit and the interface may be configured to perform a function, an operation, or the like performed by the first IAB node.

An embodiment of this application further provides a communication system. Specifically, the communication system includes a first donor node, a second donor node, a first IAB node, one or more IAB nodes controlled by the first donor node, and one or more IAB nodes controlled by the second donor node.

An embodiment of this application further provides a computer-readable storage medium, including instructions. When the instructions are run on a computer, the computer is enabled to perform the methods in the foregoing embodiments.

An embodiment of this application further provides a computer program product, including instructions. When the instructions are run on a computer, the computer is enabled to perform the methods in the foregoing embodiments.

An embodiment of this application provides a chip system. The chip system includes a processor, may further include a memory, and is configured to implement functions of the first IAB node in the foregoing methods. The chip system may include a chip, or may include a chip and another discrete component.

It should be understood that sequence numbers of processes do not mean execution sequences in embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A routing method, wherein the routing method is applied to an integrated access and backhaul IAB network, the IAB network comprises a first backhaul adaptation protocol BAP topology and a second BAP topology, the first BAP topology is managed by a first donor node, the second BAP topology is managed by a second donor node, the first donor node is different from the second donor node, and the method comprises:
receiving, by a first IAB node, a first data packet, wherein the first IAB node is managed by the first donor node, at least one parent node of the first IAB node is managed by the second donor node, and the first IAB node belongs to the first BAP topology; and
processing, by the first IAB node, the first data packet based on a BAP topology corresponding to an ingress link for receiving the first data packet and the BAP topology to which the first IAB node belongs.

2. The routing method according to claim 1, wherein the processing, by the first IAB node, the first data packet based on a BAP topology corresponding to an ingress link for receiving the first data packet and the BAP topology to which the first IAB node belongs comprises:
when the BAP topology corresponding to the ingress link used by the first IAB node to receive the first data packet is not the first BAP topology and a first condition is not met, forwarding, by the first IAB node, the first data packet based on a second BAP routing identifier and a routing table, wherein the first condition comprises: a first BAP address matches a second BAP address; wherein the second BAP routing identifier is obtained by rewriting a first BAP routing identifier of the first data packet, and the first BAP routing identifier comprises a destination BAP address and a path identifier of the first data packet; and
the first BAP address is obtained by rewriting the destination BAP address of the first data packet, and the second BAP address is a BAP address allocated by the first donor node to the first IAB node; or
the first BAP address is the destination BAP address of the first data packet, and the second BAP address is a BAP address allocated by the second donor node to the first IAB node.

3. The routing method according to claim 2, wherein the first condition further comprises: first indication information comprised in the first data packet indicates to submit the first data packet to an upper layer of a BAP layer of the first IAB node.

4. The routing method according to claim 2 or 3, wherein before the forwarding, by the first IAB node, the first data packet based on a routing table, the method further comprises:
rewriting, by the first IAB node, the first BAP routing identifier of the first data packet as the second BAP routing identifier; and
the forwarding, by the first IAB node, the first data packet based on a routing table comprises:
forwarding, by the first IAB node, the first data packet based on a next-hop BAP address that is in the routing table and that matches the second BAP routing identifier.

5. The routing method according to claim 2, wherein the processing, by the first IAB node, the first data packet based on a BAP topology corresponding to an ingress link for receiving the first data packet and the BAP topology to which the first IAB node belongs comprises:
when the BAP topology corresponding to the ingress link used by the first IAB node to receive the first data packet is not the first BAP topology and the first condition is met, submitting, by the first IAB node, the first data packet to an upper layer of a BAP layer of the first IAB node, wherein the first condition comprises: the first BAP address matches the second BAP address, wherein
the first BAP address is obtained by rewriting the destination BAP address of the first data packet, and the second BAP address is the BAP address allocated by the first donor node to the first IAB node; or
the first BAP address is the destination BAP address of the first data packet, and the second BAP address is the BAP address allocated by the second donor node to the first IAB node.

6. The routing method according to claim 5, wherein the target condition further comprises: first indication information comprised in the first data packet indicates to submit the first data packet to the upper layer of the BAP layer of the first IAB node.

7. The routing method according to claim 2, wherein the processing, by the first IAB node, the first data packet based on a BAP topology corresponding to an ingress link for receiving the first data packet and the BAP topology to which the first IAB node belongs comprises:
when the BAP topology corresponding to the ingress link used by the first IAB node to receive the first data packet is the first BAP topology and a third BAP address does not match a fourth BAP address, forwarding, by the first IAB node, the first data packet based on the routing table, wherein
the third BAP address is a destination BAP address of the first data packet, and the fourth BAP address is a BAP address allocated by the first donor node to the first IAB node.

8. The routing method according to claim 2, wherein the processing, by the first IAB node, the first data packet based on a BAP topology corresponding to an ingress link for receiving the first data packet and the BAP topology to which the first IAB node belongs comprises:
when the BAP topology corresponding to the ingress link used by the first IAB node to receive the first data packet is the first BAP topology and a third BAP address matches a fourth BAP address, submitting, by the first IAB node, the first data packet to an upper layer of a BAP layer of the first IAB node, wherein
the third BAP address is a destination BAP address of the first data packet, and the fourth BAP address is a BAP address allocated by the first donor node to the first IAB node.

9. A routing method, wherein the routing method is applied to an integrated access and backhaul IAB network, the IAB network comprises a first backhaul adaptation protocol BAP topology and a second BAP topology, the first BAP topology is managed by a first donor node, the second BAP topology is managed by a second donor node, the first donor node is different from the second donor node, and the method comprises:
receiving, by a first IAB node, a second data packet from a child node of the first IAB node, wherein the first IAB node is managed by the first donor node, at least one parent node of the first IAB node is managed by the second donor node, and the first IAB node belongs to the first BAP topology; and
when obtaining a fourth BAP routing identifier that has a mapping relationship with a third BAP routing identifier of the second data packet, forwarding, by the first IAB node, the second data packet based on the fourth BAP routing identifier and a routing table.

10. The routing method according to claim 9, wherein the method further comprises:
when the first IAB node does not obtain a BAP routing identifier that has a mapping relationship with the third BAP routing identifier of the second data packet, forwarding, by the first IAB node, the second data packet based on the third BAP routing identifier and the routing table.

11. A communication apparatus, wherein the communication apparatus is a first IAB node in an IAB network, the IAB network comprises a first BAP topology and a second BAP topology, the second BAP topology is managed by a second donor node, a first donor node is different from the second donor node, at least one parent node of the first IAB node is managed by the second donor node, the first IAB node is managed by the first donor node, and the communication apparatus comprises:
a transceiver module, configured to receive a first data packet; and
a processing module, configured to process the first data packet based on a BAP topology corresponding to an ingress link for receiving the first data packet and a BAP topology to which the first IAB node belongs.

12. The communication apparatus according to claim 11, wherein
the processing module is specifically configured to: when the BAP topology corresponding to the ingress link used by the first IAB node to receive the first data packet is not the first BAP topology and a first condition is not met, control, based on a second BAP routing identifier and a routing table, the transceiver module to forward the first data packet, wherein the first condition comprises: a first BAP address matches a second BAP address; wherein the second BAP routing identifier is obtained by rewriting a first BAP routing identifier of the first data packet, and the first BAP routing identifier comprises a destination BAP address and a path identifier of the first data packet; and
the first BAP address is obtained by rewriting the destination BAP address of the first data packet, and the second BAP address is a BAP address allocated by the first donor node to the first IAB node; or
the first BAP address is the destination BAP address of the first data packet, and the second BAP address is a BAP address allocated by the second donor node to the first IAB node.

13. The communication apparatus according to claim 12, wherein the first condition further comprises: first indication information comprised in the first data packet indicates to submit the first data packet to an upper layer of a BAP layer of the first IAB node.

14. The communication apparatus according to claim 12 or 13, wherein
the processing module is further configured to rewrite the first BAP routing identifier of the first data packet as the second BAP routing identifier; and
the processing module is specifically configured to control, based on a next-hop BAP address that is in the routing table and that matches the second BAP routing identifier, the transceiver module to forward the first data packet.

15. The communication apparatus according to claim 12, wherein
the processing module is specifically configured to: when the BAP topology corresponding to the ingress link used by the first IAB node to receive the first data packet is not the first BAP topology and the first condition is met, submit the first data packet to an upper layer of a BAP layer of the first IAB node, wherein the first condition comprises: the first BAP address matches the second BAP address, wherein
the first BAP address is obtained by rewriting the destination BAP address of the first data packet, and the second BAP address is the BAP address allocated by the first donor node to the first IAB node; or
the first BAP address is the destination BAP address of the first data packet, and the second BAP address is the BAP address allocated by the second donor node to the first IAB node.

16. The communication apparatus according to claim 15, wherein the target condition further comprises: first indication information comprised in the first data packet indicates to submit the first data packet to the upper layer of the BAP layer of the first IAB node.

17. The communication apparatus according to claim 12, wherein
the processing module is specifically configured to: when the BAP topology corresponding to the ingress link used by the first IAB node to receive the first data packet is the first BAP topology and a third BAP address does not match a fourth BAP address, control, based on the routing table, the transceiver module to forward the first data packet, wherein
the third BAP address is a destination BAP address of the first data packet, and the fourth BAP address is a BAP address allocated by the first donor node to the first IAB node.

18. The communication apparatus according to claim 12, wherein
the processing module is specifically configured to: when the BAP topology corresponding to the ingress link used by the first IAB node to receive the first data packet is the first BAP topology and a third BAP address matches a fourth BAP address, submit the first data packet to an upper layer of a BAP layer of the first IAB node, wherein
the third BAP address is a destination BAP address of the first data packet, and the fourth BAP address is a BAP address allocated by the first donor node to the first IAB node.

19. A communication apparatus, wherein the communication apparatus is a first IAB node in an IAB network, the IAB network comprises a first BAP topology and a second BAP topology, the second BAP topology is managed by a second donor node, a first donor node is different from the second donor node, at least one parent node of the first IAB node is managed by the second donor node, the first IAB node is managed by the first donor node, and the communication apparatus comprises:
a transceiver module, configured to receive a second data packet from a child node of the first IAB node; and
a processing module, configured to: when obtaining a fourth BAP routing identifier that has a mapping relationship with a third BAP routing identifier of the second data packet, control, based on the fourth BAP routing identifier and a routing table, the transceiver module to forward the second data packet.

20. The communication apparatus according to claim 19, wherein
the processing module is further configured to: when a BAP routing identifier that has a mapping relationship with the third BAP routing identifier of the second data packet is not obtained, control, based on the third BAP routing identifier and the routing table, the transceiver module to forward the second data packet.

21. A computer-readable storage medium, wherein the computer-readable storage medium stores a computer program, wherein the computer program comprises program instructions, and when the program instructions are executed by a processor, the processor is enabled to perform the method according to any one of claims 1 to 10.
